Europäisches Patentamt

European Patent Office

Office européen des brevets

(19)

(11) EP 1 204 052 A1

(12) EUROPEAN PATENT APPLICATION
published in accordance with Art. 158(3) EPC

(43) Date of publication:
08.05.2002 Bulletin 2002/19

(51) Int Cl.⁷: G06F 17/60

(21) Application number: 00985990.1

(86) International application number:
PCT/JP00/09416

(22) Date of filing: 28.12.2000

(87) International publication number:
WO 01/50362 (12.07.2001 Gazette 2001/28)

(84) Designated Contracting States:
AT BE CH CY DE DK ES FI FR GB GR IE IT LI LU
MC NL PT SE TR
Designated Extension States:
AL LT LV MK RO SI

(30) Priority: 30.12.1999 JP 37727599
30.12.1999 JP 37727799
15.12.2000 JP 2000386779

(71) Applicant: Sony Corporation
Tokyo 141-0001 (JP)

(72) Inventor: NOMA, Hideki, Sony Corporation
Shinagawa-ku, Tokyo 141-0001 (JP)

(74) Representative: DeVile, Jonathan Mark, Dr.
D. Young & Co
21 New Fetter Lane
London EC4A 1DA (GB)

(54) **PURCHASE SYSTEM AND METHOD, ORDER ACCEPTING DEVICE AND METHOD, AND COMPUTER PROGRAM**

(57)    In a purchasing system and its method, an order receiving device, an order receiving method and a computer program, question data regarding changeable items of a virtual creature or the hardware holding this virtual creature, or a robotic device are to be transmitted to the order sender, and by reflecting the buyer's answer to the question, the predetermined processing to form the virtual creature and/or hardware is conducted. Moreover, in a data sales agent system and its method, a data sales device and its method, and a computer program, the consignment sales of a part of data or control data in the virtual creature or the robotic device are to be accepted, and said part of data will be sold.

FIG. 8

**Description**

TECHNICAL FIELD

The present invention relates to a purchasing system and method, an order receiving device and method, a data sales agent system and method, a data sales device and method, and a computer program, and is suitably applied to the sales system for selling a pet robot and its motion data via the network for example.

BACKGROUND ART

In recent years a large number of pet robots and toy dolls which are programmed to act autonomically according to the external input and the surrounding environment have been devised and put in the market. Moreover, a variety of characters held as software in the personal computer and portable terminal gears such as the game machine and telephone, and having no material substance on the three-dimensional space and act autonomically on the display of the personal computer or the portable terminal gears have been introduced.

A character that exists in the personal computer, the portable terminal gears such as a game machine and telephone, and the hardware such as a robot and toy doll held in a recording medium as a software, and programmed to act or function will be referred to as a virtual creature hereunder.

However, in such conventional virtual creature, its individuality such as emotional tendency, instinct tendency and character, and the action configuration such as action, motion and sound, are determined in advance by the specifications. And this caused the problem that said specification did not fit to the taste or the living environment of all users.

Thus, in such virtual creature, if the individuality and the action configuration can be set in accordance with the user's taste and living environment, it is considered that the amusingness as the virtual creature would be increased and the entertainment factor of said virtual creature could be enhanced.

Furthermore, as described above, if the user can form the action pattern, sound and character of the virtual creature existing in the virtual space and the pet robot that becomes a substance in the three-dimensional space of said virtual creature freely and can make the virtual creature and the entertainment robot act said action patterns, it is considered that the amusingness as the virtual creature and the pet robot can be increased.

In this case if the action pattern, sound and character formed by one user can be sold to other users, the creative desire of the user would be stimulated and the high quality action pattern and sound and characters can be formed. As a result, the amusingness of the virtual creature and the pet robot can be further increased and its entertainment factor can be improved.

DESCRIPTION OF THE INVENTION

The present invention has been done considering the above point and is proposing firstly, a purchasing system and method, an order receiving device and method and a computer program capable of remarkably improving the entertainment factor of the virtual creature and the robotic device; and secondly, a data sales agent system and its method, data sales device and its method, and a computer program capable of improving the entertainment factor of the virtual creature and the robotic device.

To obviate such problems according to the present invention, in a purchasing system for purchasing a virtual creature, we provide a question data transmission means for transmitting question data relating to changeable items in the software of a virtual creature and/or the hardware holding a recording medium in which said software is stored to the first communication means of the order sender side who accessed to the second communication means provided on the order receiver side; and a data processing means for conducting the predetermined data processing for forming the virtual creature and/or hardware by reflecting the order sender's answer to the question to be transmitted from the first communication means. As a result, according to this purchasing system, the virtual creature and the hardware holding this reflecting the order sender's will can be formed. Thus, the purchasing system capable of increasing the entertainment factor of the virtual creature can be realized.

Furthermore, according to the present invention, in the purchasing method for purchasing the virtual creature, we provide the first step of the second communication means provided on the order receiving side transmitting the question data on the changeable item in the software of the virtual creature and/or the hardware having a recording medium in which said software is stored to the first communication means of the order sender side who accessed; and the second step of the second communication means conducting the predetermined data processing for forming the virtual creature and/or the hardware by reflecting the order sender's answer to the question. As a result, according to this purchasing system, a virtual creature and the hardware holding said virtual creature reflecting the order sender's will can be formed. Thereby the purchasing system capable of improving the entertainment factor of the virtual creature can be realized.

Furthermore, according to the present invention, in the order receiving device of a virtual creature, we provide a question data transmission means for transmitting the question data on changeable items related to a software of the virtual creature and/or the hardware holding a recording medium in which said software is stored to the order sender; and a data processing means for conducting the predetermined data processing for forming the virtual creature and/or the hardware by reflecting the order sender's answer to the question. As a result, according to this order receiving device, the virtual creature reflecting the order sender's will and the hardware holding this can be formed. And thereby an order receiving device capable of improving the entertainment factor of of the virtual creature can be realized.

Moreover, according to the present invention, in the order receiving method of the virtual creature, we provide the first step for transmitting the question data relating to changeable items of the software of a virtual creature and/or the hardware in which said software is stored to the order sender; and the second step for conducting the data processing for forming a virtual creature and/or a hardware by reflecting the order sender's answer to the question. As a result, according to this order receiving method, the virtual creature reflecting the order sender's will and the hardware having this virtual creature can be formed. Thus, the order receiving method capable of improving the entertainment factor of the virtual creature can be realized.

Furthermore, according to the present invention, in the computer program for making the computer execute the processing to receive an order of virtual creature, we provide the first step for transmitting question data regarding changeable items in the software of the virtual creature and/or the hardware holding a recording medium in which said software is stored; and the second step for conducting the predetermined data processing to form the virtual creature and/or hardware reflecting the order sender's answer to the question. As a result, according to this computer program, the virtual creature reflecting the order sender's will and the hardware holding this can be formed. Thereby the computer program capable of enhancing the entertainment factor of virtual creature can be realized.

Furthermore, according to the present invention, in the purchasing system for purchasing a robotic device, we provide a question data transmission means for transmitting question data relating to changeable items of the robotic device to the first communication means provided on the order sender side who accessed to the second communication means provided on the order receiver side; and a data processing means for conducting the predetermined data processing to construct the robotic device by reflecting the order sender's answer to the question. As a result, according to this purchasing system the robotic device reflecting the order sender's will can be constructed, and thereby the prchasing system capable of enhancing the entertainment factor of the robotic device can be realized.

Furthermore, according to the present invention, in a purchasing method for purchasing the robotic device, we provide the first step of the second communication means provided on the order receiver side transmitting question data relating to changeable items of the robotic device to the first communiction means provided on the order sender side who accessed; and the second step of the second communication means conducting the predetermined data processing to construct the robotic device by reflecting the order sender's answer to the question. As a result, according to this purchasing method, the robotic device reflecting the order sender's will can be constructed, and thereby the purchasing method capable of enhancing the entertainment factor of the robotic device can be obtained..

Furthermore, according to the present invention, in the order receiving device of the robotic device, we provide a question data transmission means for transmitting question data concerning changeable items of the robotic device to the order sender; and a data processing means for conducting the predetermined data processing to construct the robotic device reflecting the order sender's answer to the question. As a result, according to this order receiving device, the robotic device reflecting the order sender's will can be constructed. And thereby the order receiving device capable of enhancing the entertainment factor of the robotic device can be realized.

Moreover, according to the present invention, in the order receiving method of the robotic device, we provide the first step for transmitting question data concerning changeable items of the robotic device to the order sender; and the second step for conducting the predetermined data processing to construct the robotic device by reflecting the order sender's answer to the question. As a result, according to this order receiving method, the robotic device reflecting the order sender's will can be formed. Thereby an order receiving method capable of enhancing the entertainment factor of the robotic device can be realized.

Moreover, according to the present invention, in a computer program for making the computer execute the processing to receive an order of the robotic device, we provide the first step for transmitting question data concerning changeable items of the robotic device to the order sender who accessed via the predetermined communication path; and the second step for conducting the predetermined data processing to construct the robotic device by reflecting the order sender's answer to the question. As a result, according to this computer program the robotic device reflecting the order sender's will can be formed. And thus, a computer program capable of enhancing the entertainment factor of the robotic device can be realized.

Furthermore, according to the present invention, in the data sales agent system, we provide a consignment accepting means for accepting the consignment sales of a part of data to be given from the first communication means provided on the producer side of a part of data of said virtual creature to the second communication means provided on the sales agency side of a part of data of virtual creature; and a sales means for executing the predetermined sales processing to sell a part of virtual creature accepted the consignment to the third communication means provided on said data intending buyer side who accessed. As a result, according to this data sales agent system, the high quality action or motion will be formed by stimulating the creative desire of the general user with respect to a part of data of virtual creature and the amusingness of the virtual creature can be further enhanced. Thus, the data sales agent system capable of increasing the entertainment factor of the virtual creature can be realized.

Moreover, according to the present invention, in the data sales agent method, we provide the first step of the second communication means provided on the sales agency side of a part of data of virtual creature accepting the consignment sales of a part of data to be given from the first communication means provided on the producer side of a part of data of said virtual creature; and the second step of the second communication means executing the predetermined sales processing to sell a part of data of the virtual creature accepted the consignment to the third communication means provided on said part of data intending buyer side. As a result, according to this data sales agent method, the high quality action or motion will be formed by stimulating the creative desire of the general user with respect to a part of virtual creature, and the amusingness of the virtual creature can be further enhanced. Thus, a data sales agent method capable of enhancing the entertainment factor of the virtual creature can be realized.

Moreover, according to the present invention, in the data sales device, we provide the consignment accepting means for accepting the consignment sales of a part of data of the virtual creature that is held as a software in the hardware and acts and functions based on said software, and a sales means for conducting the sales of said part of data. As a result, according to this data sales device, the high quality action or motion can be formed by stimulating the creative desire of the general user with respect to the part of data of virtual creature and the amusingness of the virtual creature can be further increased. Thus, the data sales device capable of enhancing the entertainment factor of the virtual creature can be realized.

Furthermore, according to the present invention in the data sales method, we provide the first step for accepting the consignment on sales of a part of data of the virtual creature held as a software in the hardware and acts or motion based on said software, and the second step for conducting the sales of the part of data. As a result, according to this data sales method, the high quality action or motion will be formed by stimulating the creative desire of the general user to the part of data of the virtual creature and the amusingness of the virtual creature can be further increased. And thereby the data sales agent system capable of enhancing the entertainment factor of the robotic device can be realized.

Furthermore, according to the present invention in the computer program, we provide the first step for accepting the consignment on sales of a part of data in the virtual creature that is held as a software in the hardware and acts or functions based on said software, and the second step for conducting the sales of said part of data accepted the consignment. As a result, according to this computer program, the high quality action or motion can be formed by stimulating the creative desire of the general user to the part of data of virtual creature, and the amusingness of the virtual creature can be further increased. Thereby the computer program capable of enhancing the entertainment factor of the virtual creature can be realized.

Moreover, according to the present invention, in the data sales agent system, we provide a consignment accepting means for consignment processing the control, data to be supplied from the first communication means provided on the producer side of said control data to the second communication means provided on the control data sales agency side; and the sales means for executing the predetermined sales processing to sell the control data of the robotic device to the third communication means of the control data intending buyer side who accessed. As a result, according to this data sales agent system, the high quality action or motion will be formed by stimulating the creative desire of the general user with respect to the control data of the robotic device, and the amusingness of the robotic device can be further enhanced. Thus, the data sales agent system capable of enhancing the entertainment factor of the robotic device can be realized.

Moreover, according to the present invention, in the data sales agent method, we provide the first step of the second communication means provided on the control data sales agency side of the robotic device accepting the consignment on sales of the control data to be supplied from the first communication means provided on the control data producer side; and the second step of the second communication means executing the predetermined sales processing to sell the control data of the robotic device to the third communication means. As a result, according to this data sales agent method, the high quality action or motion can be formed by stimulating the creative desire of the general user with respect to the control data of the robotic device, and the amusingness of the robotic device can be further increased. Thus, the data sales agent method capable of enhancing the entertainment factor of the robotic device can be realized.

Furthermore, according to the present invention, in the data sales device, a consignment accepting means for accepting the consignment on sales of the control data of the robotic device which acts or functions based on the predetermined control data and a sales means for conducting the sales of said control data are provided. As a result, according to this sales sales device, the high quality action or motion can be formed by stimulating the creative desire of the general user to the control data of the robotic device, and the amusingness of the robotic device can be further enhanced. Thereby the data sales device capable of enhancing the entertainment factor of the robotic device can be realized.

Moreover, according to the present invention, the first step for accepting the consignment on sales of the control data of the robotic device that acts or moves based on the predetermined control data, and the second step for conducting the sales of said control data are provided. As a result, according to this data sales method, the high quality action or motion can be formed by stimulating the creative desire of the general user to the control data of the robotic device, and thus the amusingness of the robotic device can be further increased. Thereby the data sales method capable of enhancing the entertainment factor of the robotic device can be realized.

Moreover, according to the present invention, in the computer program, the first step for accepting the consignment on sales of the control data of the robotic device that acts or functions based on the predetermined control data, and the second step for conducting the sales of said control data accepted the consignment are provided. As a result, according to this computer program, the high quality action or motion can be formed by stimulating the creative desire of the general user to the control data of the robotic device, and thus the amusingness of the robotic device can be further increased. Thereby the computer program capable of enhancing the entertainment factor of the robotic device can be obtained.

BRIEF DESCRIPTION OF DRAWINGS

Fig. 1 is a perspective view showing the construction of a pet robot according to the first embodiment.
Fig. 2 is a block diagram showing the circuit construction of the pet robot shown in Fig. 1.
Fig. 3 is a block diagram showing the software construction of the pet robot.
Fig. 4 is a conceptual diagram showing the probability automaton.
Fig. 5 is a conceptual diagram showing the condition transition table.
Fig. 6 is a block diagram showing the construction of a pet robot sales system according to the first embodiment.
Fig. 7 is a block diagram showing the general construction of a server.
Fig. 8 is a flow-chart showing the pet robot purchasing procedure.
Fig. 9 is a brief linear diagram showing the design selection screens.
Fig. 10 is a schematic diagram showing the changeable design item.
Fig. 11 is a schematic diagram illustrating the first simulation screen.
Fig. 12 is a schematic diagram showing the question screen.
Fig. 13 is a schematic diagram illustrating the changeable internal condition items and changeable action configuration items.
Fig. 14 is a schematic diagram illustrating the software changing procedure in the server.
Fig. 15 is a schematic diagram showing the second simulation screen.
Fig. 16 is a perspective view showing the construction of a pet robot according to the second embodiment.
Fig. 17 is a block diagram showing the circuit construction of the pet robot shown in Fig. 16.
Fig. 18 is a block diagram showing the software construction of the control program.
Fig. 19 is a conceptual diagram showing the probability automaton.
Fig. 20 is a block diagram showing the construction of the data sales system according to the second embodiment.
Fig. 21 is a block diagram showing the general construction of a server.
Fig. 22 is a flow-chart showing the data registration procedure.
Fig. 23 is a flow-chart showing the control data purchasing procedure.
Fig. 24 is a schematic diagram showing the motion file display window.
Fig. 25 is a schematic diagram showing the data registration screen.
Fig. 26 is a schematic diagram showing the classification specification screen.
Fig. 27 is a schematic diagram showing the index screen.
Fig. 28 is a schematic diagram showing the motion confirmation screen.

BEST MODE FOR CARRYING OUT THE INVENTION

With reference to the accompanying figures one embodiment of the present invention will be described.

(1) The First Embodiment

(1-1) Construction of Pet Robot according to the First Embodiment

(1-1-1) Construction of Pet Robot

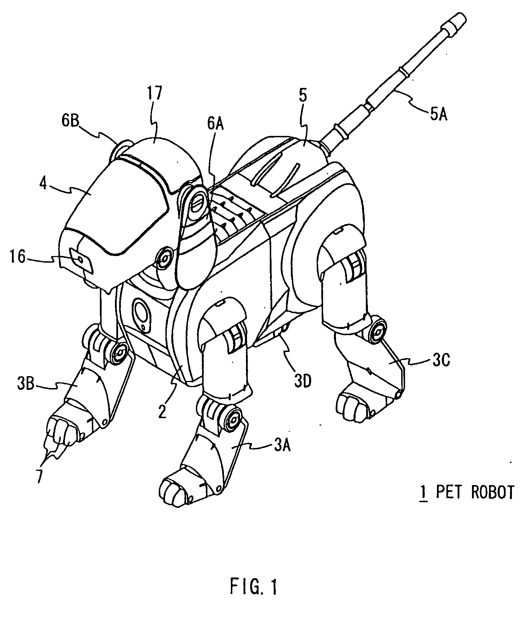

In Fig. 1, 1 generally shows a pet robot according to the embodiment of the present invention. This pet robot is constructed in such a manner that leg units 3A to 3D are connected to the front and rear and the right and left sides of a body unit 2 respectively, and a head unit 4 and a tail unit 5 are connected to the front edge part and the rear edge part of the body unit 2 respectively.

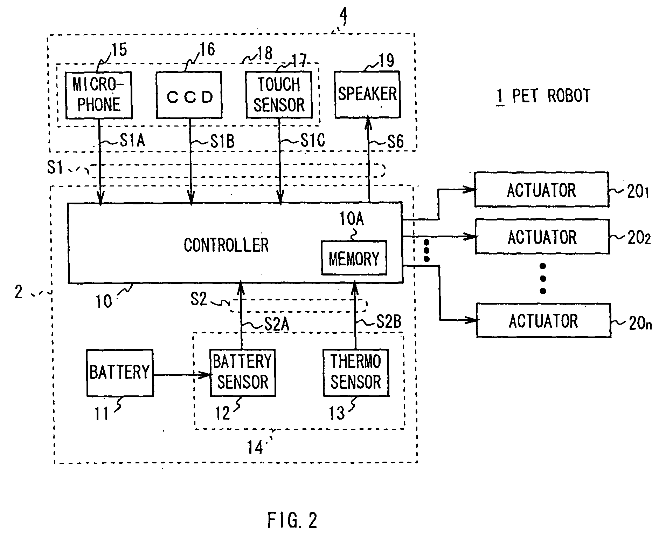

As shown in Fig. 2, a controller 10 to control the overall function of this pet robot 1, a battery 11 to become the power source of this pet robot 1, and an internal sensor unit 14 having a battery sensor 12 and a thermo sensor 13 are stored in the body unit 2.

Moreover, in the head unit 4, a microphone 15 which is equivalent to "ear" of this pet robot, a CCD (Charge Coupled Device) camera 16 which is equivalent to "eye", a touch sensor 17 and a speaker 18 which is equivalent to "mouth" are arranged on the predetermined positions respectively.

Furthermore, actuators $19_1$ to $19_n$ are placed onto joint parts of leg units 3A to 3D, connecting parts of leg units 3A to 3D and the body unit 2, the connecting part of the head unit 4 and the body unit 2, and the connecting part of the tail unit 5 and the body unit 2 respectively.

Then, the microphone 15 of the head unit 4 collects the command sounds such as "walk", "lie down" or "chase after a ball" to be given from the user as musical scales via the sound commander (not shown in Fig.) and transmits the resultant audio signal S1 to the controller 10. Moreover, the CCD camera 16 photographs the surrounding condition and transmits the resultant image signal S2 to the controller 10.

Furthermore, as is obvious from Fig. 1, a touch sensor 17 is placed on the upper part of the head unit 4, and detecting the pressure received from the user by the physical action such as "pat" and "hit", transmits the detection result to the controller 10 as a pressure detection signal S3.

Furthermore, the battery sensor 12 of the body unit 2 detects the energy remaining quantity of the battery 11 and transmits the detection result to the controller 10 as a battery remaining quantity detection signal S4. The thermo-sensor 13, detecting the internal heat of the pet robot 1, transmits the resultant to the controller 10 as a thermo detection signal S5.

The controller 10 judges the surrounding condition and the existence or non-existence of command and action from the user based on the audio signal S1, the image signal S2, the pressure detection signal S3, the battery remaining quantity detection signal S4 and the thermo detection signal S5 to be supplied from the microphone 15, the CCD camera 16, touch sensor 17, battery sensor 12 and the thermo-sensor 13.

Then, the controller 10 determines the action and motion to be followed based on the judgment result and the control program including various control parameters stored in the memory 10A in advance. Then, based on the determination result, the controller 10, by driving the necessary actuator $19_1$ to $19_n$, causes the robot to conduct the action or motion such as making the head unit 4 swing up and down and right and left, the tail 5A of the tail unit 5 wag, and driving each leg unit 3A to 3D, makes the robot walk. In the following chapters, a set of motions is defined as an action and will be used.

Furthermore, in this case, the controller 10, supplying the predetermined audio signal S6 stored in the memory 10A to the speaker 18 as occasion demands, outputs the sound based on said audio signal S6, or flashes the LED (light emitting diode) (not shown in Fig.) provided on the position of "eye" of the pet robot.

Thus, this pet robot is designed so that it can act autonomously based on the surrounding condition and the control program stored in the memory 10A.

(1-1-2) Software Configuration of Control Program

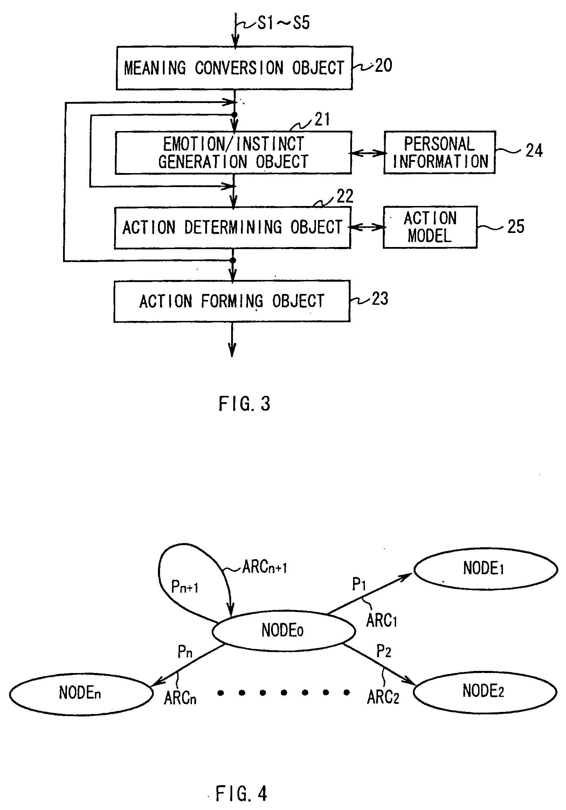

At this point, the software configuration of said control program in the pet robot 1 will be shown in Fig. 3. As is clear from this Fig. 3, the control program is comprised of a meaning conversion object 20, an emotion/ instinct generation object 21, an action determining object 22 and an action generation object 23.

In this case, the meaning conversion object 20 enters the audio signal S1, image signal S2, pressure detection signal S3, battery remaining quantity detection signal S4 and the thermo detection signal S5 to be given from the microphone 15, CCD camera 16, touch sensor 17, battery sensor 12 and the thermo-sensor 13. And based on these it recognizes the specific external condition and internal condition such as "is hit", "is patted", "detect a ball", "short of battery remaining quantity" and "internal temperature becomes high", and notifies the recognition result to the emotion/instinct generation object 21 and the action determining object 22.

The emotion/instinct generation object 21 determines the emotion and instinct conditions of the pet robot 1 based on the recognition result to be given from the meaning conversion object 20, the personal information 24 that is one of control parameters stored in the memory 10A, and the notification showing the executed action to be given from the action determining object 22 to be described later, and informs this to the action determining object 22 when the emotion and instinct condition exceeds the predetermined level.

More specifically, the emotion/instinct generation object 21 comprises an emotion model having 6 parameters in total showing the strength of each emotional action such as "joy", "sadness", "anger", "surprise", "fear" and "disgust" and an instinct model having 4 parameters showing the strength of each desire such as "desire for love", "desire for search", "desire to excise", and "appetite".

Moreover, in the memory 10A, the recognition result of the meaning conversion object 20, such as when "it is "hit", it increases the parameter of "anger" and decreases the parameter of "joy", and when "it is patted", it increases the parameter of "joy" and decreases the parameter of "anger". And when it discovers some action, as well as increasing the parameter of "desire to exercise", increases the parameter of "joy"; and the data as to which parameter value of emotional action or desire would be increased or decreased with respect to the notice informing that the action from the action determining object 22 (to be described later) has been conducted are stored.

Then, the emotion/instinct generation object 21 changes the corresponding parameter value of emotional action or desire of the emotion model or instinct model periodically based on the recognition result to be given from the meaning conversion object 20 and/or the notice from the action determining object 22 based on the personal information.

More specifically, regarding each emotional action, the emotion/instinct generation object 21 calculates the parameter value of the next cycle of that emotional action $E_{(n)}$ as follows:

$$E_{(n)} = k_e \times P + E_{(n-1)} \quad (1)$$

Where the parameter value of the immediately preceding cycle of that emotional action to be $E_{(n-1)}$; the value to be obtained by the predetermined computation based on the recognition result given during that cycle and notification contents from the action determining object 22 to be P; and the coefficient value showing the sensitivity set in advance to that emotional action to be $k_e$. Then, the emotion/instinct generation object 21 changes that parameter value of emotional action to this parameter value $E_{(n)}$.

Moreover, regarding each desire, the emotion/instinct generation object 21 calculates the parameter value of the following cycle of that desire $I_{(n)}$ as follows:

$$I_{(n)} = k_i \times Q + I_{(n-1)} \quad (2)$$

Where the parameter value of one cycle preceding that desire to be $I_{(n-1)}$; the value to be obtained by the predetermined calculation based on the recognition result given during that cycle and the notification contents from the action determining object 22 to be Q; and the coefficient value showing sensitivity set in advance to that desire to be $k_i$.

Then it changes that parameter value of desire to this parameter value $I_{(n)}$.

Then, when either of the parameter values, emotion or desire parameter, exceeds the value set in advance to the emotion or instinct as a result of the updating processing of parameter value, the emotion/instinct generation object 21 informs this to the action determining object 22.

The action determining object 22 determines the following action and motion based on the recognition result to be supplied from the meaning conversion object 20, the notification from the emotion/instinct generation object 21 and the action model 25 that is one of control parameters stored in the memory 10A, and informs the determination result to the action generation object 23.

In the case of this embodiment, as shown in Fig. 4, as the method to determine the next action, the action determining object 22 uses the algorithm called as the probability automaton to determine as to one node (condition) $NODE_0$ to $NODE_n$ as shown in Fig. 4 would be transited to which node $NODE_0$ to $NODE_n$ based on the transition probability $P_1$ to $P_{n-1}$ set respectively to arcs $ARC_1$ to $ARC_{n-1}$ for connecting between each node $NODE_0$ to $NODE_n$.

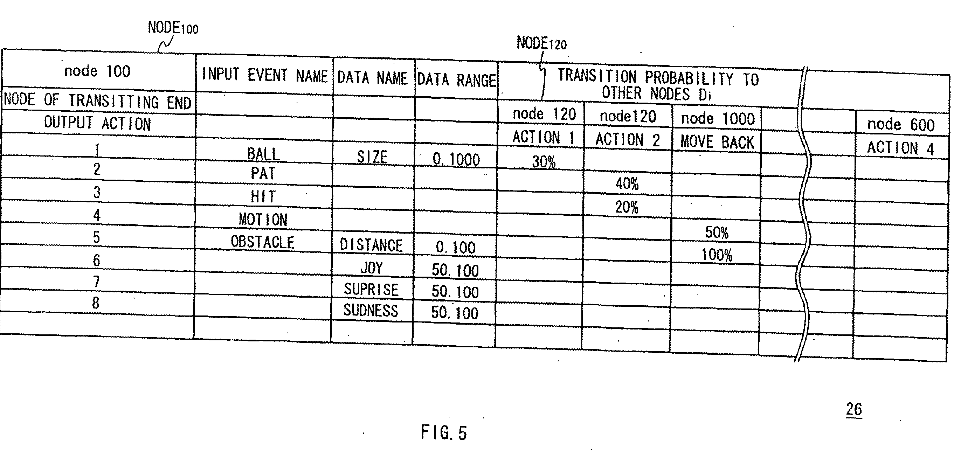

More specifically, in the memory 10A, a condition transition table 26 per each node $NODE_0$ to $NODE_n$ as shown in Fig. 5 is stored as an action model 25, and the action determining object 22 sets the following action based on the condition transition table 26.

More specifically, in the condition transition table 26, input events (recognition result) that become the condition in that node $NODE_0$ to $NODE_n$ are listed in the column of "Input Event" in priority order, and additional conditions on that transition condition are described on the corresponding lines in columns of "Data Name" and "Data Range".

Accordingly, in the node $NODE_{100}$ shown in the node transition table of Fig. 5, when the recognition result such as "a ball is detected (BALL)" is given, "the size (SIZE)" of that ball to be given with said recognition result is in "the range from 0 to 1000 (0, 1000) becomes the condition for transferring to other node, and when the recognition result "an obstacle is detected (OBSTACLE)" is given, "the distance (DISTANCE)" to that obstacle to be given with said recognition result is "the range from 0 to 100 (0, 100)" becomes the condition for transferring to other node.

Furthermore, in this node $NODE_{100}$, even in the case where no recognition result is entered, in parameter values of each emotional action and desire of emotion model and instinct model in the emotion/instinct generation object 21 to which the action determining object refers periodically, if one of parameter values of emotional actions, "joy (JOY)", "surprise (SURPRISE)" and "sadness (SADNESS)" is in "the range from 50 to 100 (50, 100)", it can be transitted to other nodes.

Futhermore, in the condition transition table 26, names of nodes to which the node $NODE_0$ to $NODE_n$ can be transitted are listed in the row of "Node of the Transitting End" in the column of "Transition Probability to other nodes". And simultaneously, the transition probability to other nodes $NODE_0$ to $NODE_n$ when all conditions described in each line of "Input Event Name", "Data Value" and "Data Range" are satisfied is described on the line of "Output Action" in the column of "Transition Probability to other nodes". In this connection, the sum of transition probability of each line in the column of "Transition Probability to Other Nodes" becomes 100 [%].

Accordingly, in the node $NODE_{100}$ shown in the condition transition table 26 of Fig. 5, when "a ball is detected (BALL) and the recognition result that "the size (SIZE)" of that ball is from "the range of 0 to 1000 (0, 1000)" is given, it can be transitted to "the node

$NODE_{120}$ (node 120)" in the probability of "30[%]", and at this moment, the action of "ACTION 1" will be put out.

The action model 25 is formed of a number of nodes $NODE_0$ to $NODE_n$ described as the condition transition table 26 linking together. When the recognition result is supplied from the meaning conversion object 20 and the notification is given from the emotion/instinct generation object 21, the action determining object 22 determines the next action and motion in utilizing the condition transition table 26 of the corresponding node $NODE_0$ to $NODE_n$ stored in the memory 10A, and informs the determination result to the action generation object 23.

Based on the notification from the action determining object 22, the action generation object 23 drives the corresponding actuators $19_1$ to $19_n$ so that the pet robot 1 conducts the specified action and motion. And based on the sound data in the sound data file that is one of control parameters stored in the memory 10A, the action generation object 23 generates the corresponding audio signal S6 (Fig. 2) and outputs this to the speaker 18. Or based on the light emitting data in the light emitting data file that is one of control parameters stored in the memory 10A, it flashes the LED placed on the position of "eyes" using the corresponding light emitting pattern.

Thus, based on the control program, the pet robot 1 can conduct the autonomic actions in accordance with its own and surrounding conditions and the direction and action from the user.

(1-2) Contruction of Pet Robot Sales System 30 according to the First Embodiment

(1-2-1) Construction of Pet Robot Sales System

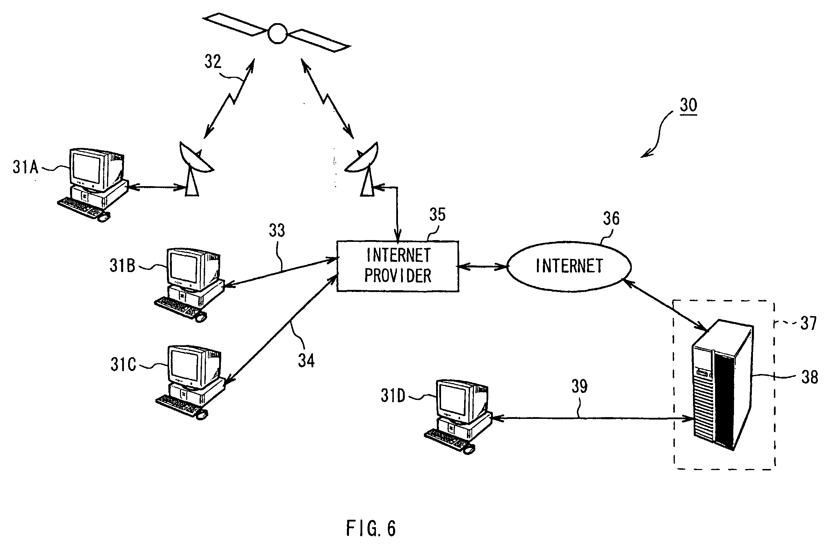

Fig. 6 shows a network system (hereinafter referred to as pet robot sales system) 30 for selling the pet robot 1.

In such pet robot sales system 30, as well as personal terminals 31A to 31C are connected to an Internet provider 35 via a satellite communication circuit 32, a cable television circuit 33 or a telephone line 34, said Internet provider 35 is connected to a server 38 set by the sales agency 37 of the pet robot 1 via the Internet 36. Furthermore, a personal terminal 31D is directly connected to the server 38 via the general public line 39.

In this case, each personal terminal 31A to 31D is a normal personal computer set in the general household, and communicates with the server 38 via the Internet 36 or the general public line 39 and can transmit/receive the necessary data between said server 38.

Furthermore, the server 38 is the Web server to conduct various processings in the case where the sales company 37 sells the pet robot 1 by means of the electronic commercial transaction. And this server 38 sends out various screen data to the personal terminals 31A to 31D that accessed via the internet 36 or the general public line 39 and forming the necessary image data, can display the image based on said image data on the corresponding screen.

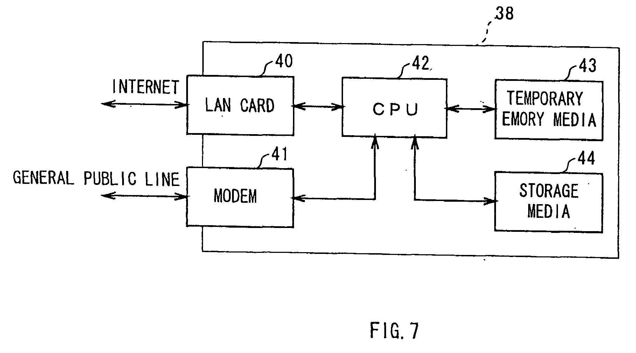

The construction of this server 38 is shown in Fig. 7. As is clear from this Fig. 7, the server 38 comprises a LAN (Local Area Network) card 40 in wich the interface circuit for the Internet 36 is built in, a modem 41 as the interface circuit for the general public line 39, a CPU 42 to control the overall control of server 38, a temporary memory media 43 formed of semiconductor memory as the work memory of the CPU 42, and the storage media 44 such as a hard disk device in which various data for the server 38 conduct the processing that will be described later are stored.

Then, in the server 38, data and commands to be supplied from the personal terminal 31A to 31D that accessed through the internet 36 or the general public line 39 are captured into the CPU 42 via the LAN card 40 or the modem 41, and the predetermined processing will be executed based on said data and command and the control information stored in the storage media 44.

Then, the CPU 42 forms screen data of the corresponding screen as a result of this processing as occasion demands and transmits this to the corresponding personal terminal 31A to 31D via the LAN card 40 or the modem 41.

(1-2-2) Sales Procedure of Pet Robot 1

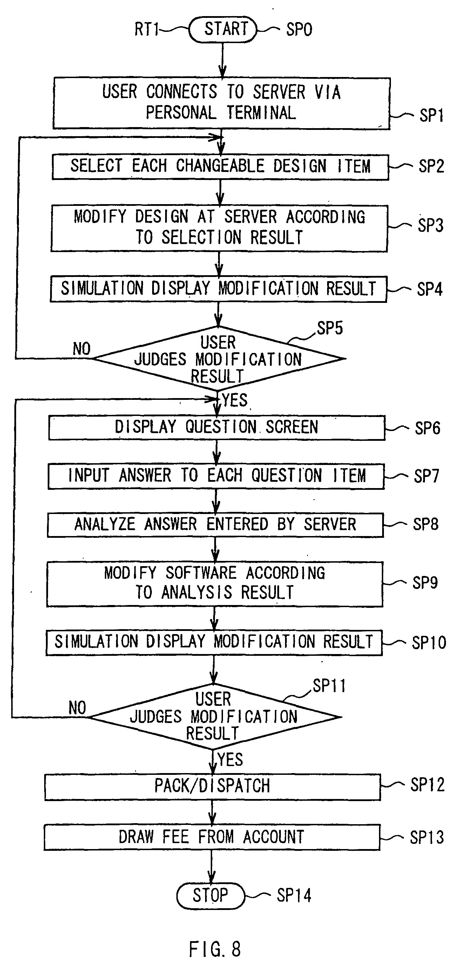

Next, the sales procedure of the pet robot 1 according to this pet robot sales system 30 will be explained. This pet robot sales system 30 makes the user can buy the pet robot customizing the designs of the head unit 4, the body unit 2 and each leg unit 3A to 3D of the pet robot 1, the internal condition such as emotional tendency, instinct tendency and character, and the action configuration (program) such as action, motion and sound, to the specifications fitting to buyer's taste and living environment according to the pet robot purchasing procedure RT shown in Fig. 8.

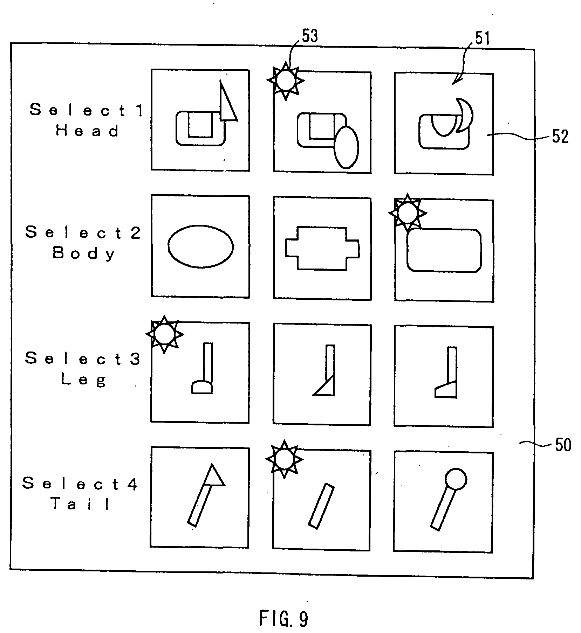

More specifically, in this pet robot sales system 30, firstly, the buyer of the pet robot 1 accesses to the server 38 using the personal terminal 31A to 31D (step SP1). As a result, the design selection screen 50 in which changeable items that the buyer can change from the standard design of the pet robot 1 (hereinafter referred to as changeable design items) are listed as shown in Fig. 9 is displayed on the display of the personal terminal 31A to 31D based on the screen data to be transmitted from the server 38.

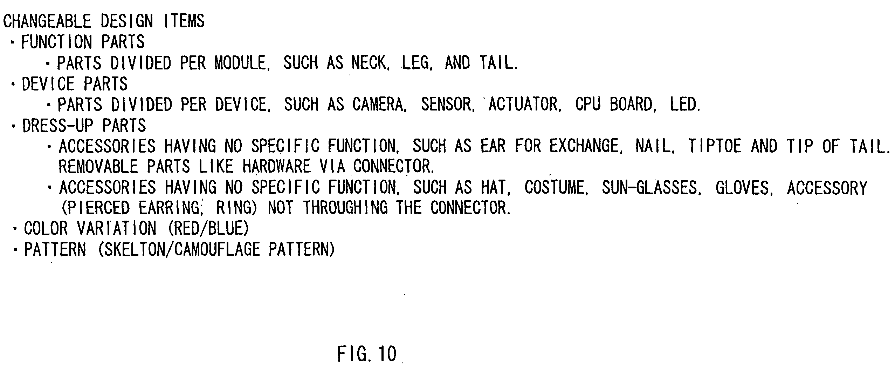

At this point, in the case of pet robot 1, as the changeable design items, as shown in Fig. 10, there are the external shape of function parts divided per module, such as the head unit 4, body unit 2, each leg unit 3A to 3D and the tail unit 5, and the existence of dress-up parts which are removable via the connector and have no special function like the hardware (ear for exchange 6A, 6B (Fig. 1), nail 7 (Fig. 1), tiptoe and the tip of tail 5A), and the existence of dress-up parts which are removable without passing through the connector (such as a hat, costume, sun-glasses, gloves, pierced earring and ring, etc.), and the color variation (red/blue) of the pet robot 1, and the pattern (skelton/camouflage pattern).

In the design selection screen 50, regarding all these changeable design items, a plurality of selection parts are displayed per each changeable design item as an image picture 51. And in this design selection screen 50, sequentially clicking the button 52 on which the image picture 51 of the desired selection part is displayed by operating the mouse, that changeable design item can be selected. On the design selection screen 50, the mark 53 as shown in Fig. 9 will be displayed on the button 52 of the selection part selected in each changeable item.

Then, the buyer selects the desired selection parts as described above on all changeable design items (step SP2).

On the other hand, when the buyer finishes the selection on all variable design items as described above, the CPU 42 of the server 38 conducts the customization processing onto the whole body design of the pet robot 1 from the standard design based on these selection results (step SP3).

More specifically, the CPU 42 conducts the processing to change the necessary function parts such as the head unit 4 to the other function part according to the user's selection input on the design selection screen 50, the processing to add the specified dress-up part data, the processing to change the color of the pet robot 1 to the color selected by the user, and the processing to add the pattern to the pet robot 1 onto image data of the computer graphic (CG) of the pet robot with the standard design stored in the storage media 44 in advance (hereinafter referred to as computer graphic image data) based on various function parts, dress up part data and color variation data and pattern data stored in the storage media 44 in advance.

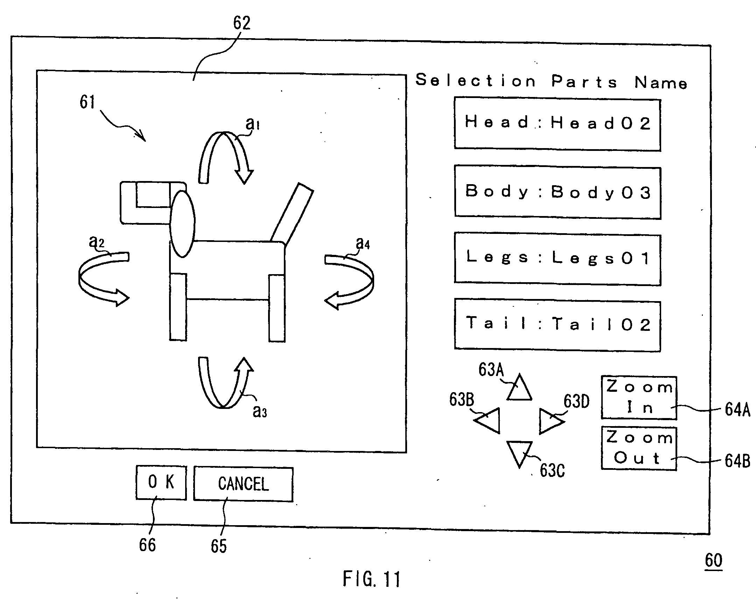

Then, the CPU 42, outputting the screen data including thus obtained computer graphic image data to the personal terminal 31A to 31D, displays the first simulation screen 60 as shown in Fig. 11 on the display of said personal terminal 31A to 31D (step SP4).

This first simulation screen 60 is the screen to simulation display the pet robot 1 as to actually how its exterior becomes as a result of said selection. And the three-dimensional image picture 61 of the pet robot 1 formed by the CPU 42 of the server 38 is displayed in the preview column 62 in accordance with the selection result of the buyer to each changeable design item.

In this first simulation screen 60, by pressing the first to fourth turning button 63A to 63D displayed on the lower right side of the screen, the tree-dimensional image picture 61 displayed in the preview column 62 can be turned in the corresponding turning direction (arrow marks $a_1$ to $a_4$), and by pressing a zoom-in button 64A or zoom-out button 64B displayed on the right side of the first to fourth turning button 63A to 63D, said three-dimensional image picture 61 can be gradually enlarged or decreased.

Then, the prospective buyer judges whether the design of the pet robot 1 which he intends to buy is acceptable to him or not based on the three-dimensional image picture 61 (i.e., the exterior of the pet robot 1) (step SP5).

In this case, if this design is not acceptable to the prospective buyer, he may click the cancel button 65. And in this case, said design selection screen 50 (Fig. 9) is displayed again on the display of the personal terminal 31A to 31D based on the screen data to be transmitted from the server 38. Thus, the buyer can reselect the desired selection parts on each customizable design item in utilizing the design selection screen 50.

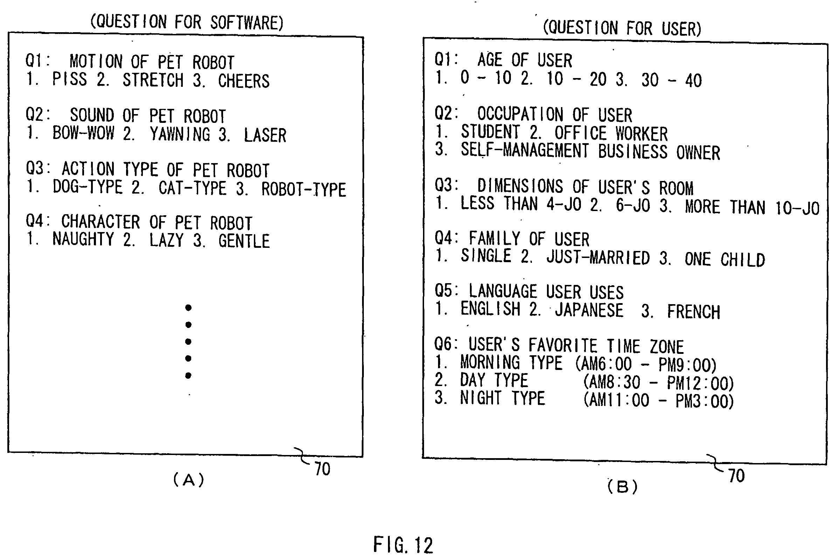

Furthermore, when the three-dimensional image picture 61 is acceptable to the buyer, he clicks OK button 66. In this case, the question screen 70 as shown in Fig. 12 (A) and (B) is displayed on the personal terminal 31A to 31D based on the image data to be transmitted from the server 38 in place of the first simulation screen 60.

In this question screen 70, various question items in the case of customizing the changeable items (hereinafter referred to as changeable internal condition items and changeable action configuration items) matching to the prospective buyer's taste and living environment are listed.

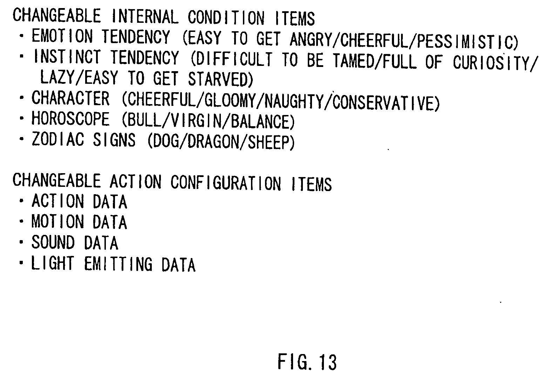

At this point, in the case of pet robot 1, as the changeable internal condition items, such as shown in Fig. 13, there are "emotional tendency" (easy to get angry, cheerful, pessimistic, etc.) and "instinct tendency" (difficult to be tamed, full of curiosity, lazy, easy to get starved, etc.), "character" (gay, gloomy, naughty, conservative, etc.), "horoscope" (Bull (Taurus), Virgin (Virgo), Balance (Libro), etc.), and "zodiac signs" (dog, dragon, sheep, etc). Moreover, as the changeable action configuration items there are "action" (dog-type, cat-type or action model of the robot-type, etc.), "motion" (the relation between emotion/instinct and the motion), "sound" (bow-wor, mew-mew, etc.), and "light emitting" (the relation between emotion/instinct and the light emitting pattern, etc.).

Then, in the case of changing these changeable internal condition items and changeable action configuration items corresponding to the buyer's taste and living environment, various question items for asking said buyer's taste and living environment on the "favorite software" (Fig 12 (A)) and "the user's living environment" (Fig. 12 (B)), and answers to these question items are listed in the question screen 70.

For example, regarding the "favorite software"; "motion of pet robot", "sound of pet robot", "action type of pet robot" are listed as the question items. And, as the selecting parts of answers to these question items; "1. Piss, 2. Stretch, 3. Cheers", "1. Bow-wow, 2. Yawning, 3. Laser", and "1. Dog-type, 2. Cat-type, 3. Robot-type", are listed.

Furthermore, regarding the "user's living environment", "the user's age", "user's occupation", "the dimensions of user's room" are listed as the question items, and as the selecting parts of answers to these question items "1. 0 - 10, 2. 10 - 20, 3. 30 - 40" are listed.

Moreover, in the question screen 70, by sequentially clicking the corresponding selecting parts by operating the mouse, the answer to that question item can be selected and the color of letters of selected parts will be changed.

Thus, the buyer enters his answer to each question item described in the question screen 70 by successively clicking the corresponding selection parts (step SP7).

On the other hand, the CPU 42 (Fig. 7) of the server 38 analyzes the user's taste and his living environment with respect to changeable interal condition items and changeable action configuration items based on the buyer's answer to each question item thus obtained (step SP8). And based on said analysis result, it changes various standard control parameters of the pet robot 1 which are stored in the storage media 44 in advance (step SP9).

More specifically, as the processing related to the "emotional tendency" in the changeable internal condition items, the CPU 42 can cause the pet robot 1 to get angry more easily or joyful by changing the amount of change of each emotional action with respect to the input by modifying the value of coefficient of each emotional action $k_0$ of said emotion/instinct generation object 21 (Fig. 3), and by modifying the personal information 24 (Fig. 3) stored in the memory 10, the CPU 42 increases/decreases the parameter value of emotional action with respect to the specific input.

Furthermore, as the processing related to the "instinct tendency", the CPU 42, changing the value of coefficient of each desire $k_i$ of the emotion/instinct generation object 21 and by changing the amount of change of each desire with respect to the input, makes the instinct tendency of the pet robot 1 difficult to be tamed or full of curiosity, and by modifying the personal information 24, it increases/decreases the parameter value of the specific desire to the specific input.

Furthermore, as the processing related to "character", the CPU 42 changes the values of coefficient of each emotional action and each desire $k_0$, $k_i$ respectively, and by changing the amount of change of each emotional action and each desire to the input, changes the character of pet robot 1 to be joyful or gloomy, and by modifying the personal information 24, it increases or decreases the parameter value of the specific emotional action and/or the specific desire to the specific input.

Furthermore, as the processing related to "horoscope", the CPU 42 determines the "horoscope" from the current date, and simultaneously, changing values of each emotional action and desire $k_0$, $k_i$, of the emo-

tion/instinct generation object 21 fitting to "horoscope" respectively, changes "emotion tendency", "instinct tendency" and "character" to the predetermined tendencies. And the CPU 42, by modifying the corresponding part of the action model 25 (Fig. 3) so that it fits to the "horoscope", that will be described later, changes the action pattern of the pet robot 1.

More specifically, in the case of "Taurus", the CPU 42 changes the coefficient values of each emotional action and each desire $k_0$, $k_i$ of the emotion/instinct generation object 21 so that the pet robot 1 will have the "emotion tendency", "instinct tendency" and "character" like a "bull". On the other hand, it changes the action model 25 so that a variety of action patterns imitating the "bull" would be appeared. Moreover, in the case of "Virgn", coefficient values of each emotional action and each desire $k_0$, $k_i$ of the emotion/instinct generation object 21 will be changed so that the pet robot has the "woman (female)" like "emotion tendency", "instinct tendency" and "character". And the action model 25 will be changed so that a variety of "woman (or female) like action patterns will be frequently appeared.

Similarly, as the processing related to the "zodiac signs, the CPU 42, as well as determining the "zodiac signs" from the present date, changes the coefficient value of each emotional action and each desire $k_0$, $k_i$ of the emotion/instinct generation object 21 corresponding to the "zodiac signs" respectively, and changes "emotion tendency", "instinct tendency" and "character" to the predetermined tendencies. And by modifying the corresponding parts of the action model 25 in order to fit to these "zodiac signs", changes the action pattern that the pet robot 1 conducts.

More specifically, in the case of "dog", the value of coefficient of each emotional action and each desire $k_0$, $k_i$ of the emotion/instinct generation object 21 will be changed so that the pet robot 1 has the "emotion tendency", "instinct tendency" and "character" like a "dog". On the other hand, the action model 25 will be changed so that the action pattern imitating the "dog" will be frequently appeared.

On the other hand, as the processing related to the "action" in changeable action configuration items, the CPU 42, modifying the corresponding part of the action model 25 (Fig. 3) to be stored in the memory 10A as described above, changes the action of the pet robot 1. For example, at one node of the action model 25, in the case where it is defined that it produces 'the motion of "punch" at the transition probability "50 [%]" when the parameter value of emotional action of "anger" in the emotion/instinct model generation object 21 is "100". And at this point, if it is defined to reproduce the light emitting data for "punch", as well as reproducing the sound data for "punch", the CPU 42 modifies the parameter value of emotional action of "anger" "100" to "90", or modifies the transition probability "50 [%]" to "80 [%]", modifies the action model 25 by changing, deleting or adding the action, sound and light emitting patterns.

Furthermore, as the processing regarding the "motion", the CPU 42 adds or deletes said motion data (data for generating motion), and modifies the part on which "the correlation between the internal condition and action" is recorded. For example, in the case where it is described that one node of the action model 25 'conduct the motion of "cheers" when the parameter value of "joy" becomes "100"', the CPU 42 modifies it to act the motion of " pose of gratitude" when the parameter value of "joy" becomes "100".

Furthermore, as the processing regarding "sound" and "light emitting", the CPU 42 adds or deletes the sound data or the light emitting data to generate the corresponding sound and light emitting patterns, and modifies the part in the action model 25 on which "the relation between the internal condition and sound" or "the relation between the internal condition and the light emitting pattern" is recorded.

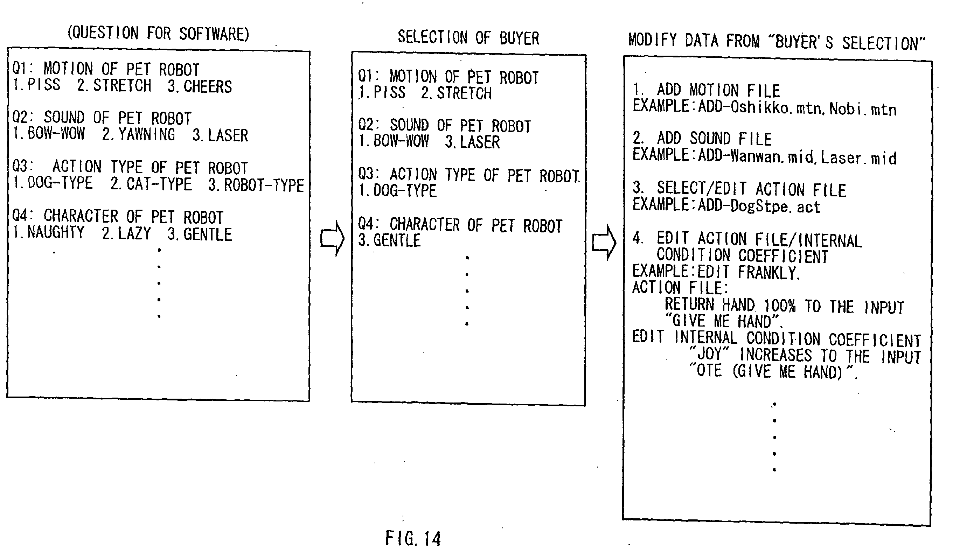

In this connection, in the changeable internal condition items and changeable action configuration items, which items and how to change these are determined in advance according to the buyer's answer to the question items in the question screen 70. For example, as shown in Fig. 14, in the case where the buyer's answers to the question items of "the motion of pet robot" are "piss" and "stretch", the "action" and "motion" of the changeable action configuration items are changed, and the motion data for generating motions of "piss" and "stretch" are added and the action model 25 is modified in order to act motions of "piss" and "stretch".

Moreover, in the case where the buyer's answer to the question item of "the character of pet robot" is "gentle", the "action" of the changeable action configuration item and the "character" of the customizable internal condition related item are changed. And as well as the action model 25 is being modified so that it gives its hand back 100 [%] with respect to the input of "give me hand, the personal information 24 is modified so that the parameter of "joy" increases to the input of "give me hand".

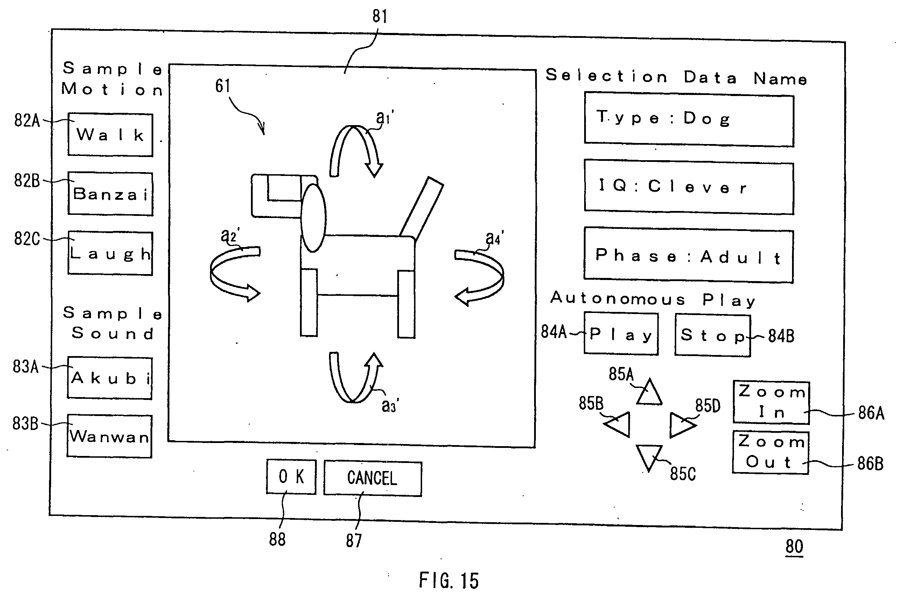

Then, the CPU 42 of the server, after customizing various standard control parameters fitting to the taste and the living environment of the buyer according to the customizing processing, outputs the predetermined screen data to the corresponding personal terminal 31A to 31D and displays the second simulation screen 80 as shown in Fig. 15 on the display of said personal terminal 31A to 31D (step SP10).

This second simulation screen 80 is the screen to simulate display the pet robot 1 as to actually how its internal condition and action configuration will become based on the buyer's answer to each question item in said question screen 70. And in this second simulation screen 80, the three-dimensional image picture 61 of the pet robot 1 formed at the step SP3 based on the computer graphic image data is displayed on the preview column 81.

Furthermore, in the second simulation screen 80, a plurality of sample motion buttons 82A to 82C and sample sound buttons 83A, 83B are provided on the left side of the preview column 81 corresponding respectively to several motions (such as "walk", "cheers", "laugh" and sounds (such as "yawning", "baw-wow"). And by press operating these sample motion buttons 82A to 82C and sample sound buttons 83A and 83B, can cause the three-dimensional image picture 61 to be displayed on the preview column 81 to conduct the action and motion corresponding to said sample motion button 82A to 82C or the sample sound buttons 83A and 83B, and can also cause the corresponding sound to be put out from the speaker of the personal terminal 31A to 31D.

Furthermore, in the second simulation screen 80, a play button 84A and a stop button 84B are placed on the right side of the preview column 81, and by press-operating the play button 84A, can make the three-dimensional image picture 61 of the pet robot 1 displayed on the preview column 81 to act autonomously based on various control data customized as described above.

In practice, at this point, the CPU 42 of the server 38 determines the action that the three-dimensional image 61 of the pet robot 1 acts next in the same manner as described above in Fig. 3 based on these customized various control parameters, and by forming the computer graphic image data of the three-dimensional image picture 61 of the pet robot 1 so that it can act according to the determination result, and transmitting this to the corresponding personal terminal 31A to 31D, it displays the three-dimensional image picture 61 of the pet robot 1 displayed on the second simulation screen 80 so that it can act autonomously.

Moreover, under such condition if the stop button 84B in the second simulation screen 80 is pressed, the CPU 42 displays said three-dimensional image picture 61 in a state of its action stopped.

In this connection, in this second simulation screen 80, the first to the fourth rotating buttons 63A to 63D (Fig. 11) of the first simulation screen 60 (Fig. 11) and the first to the fourth turning buttons 85A to 85D having the same function as those of described above respectively, and a zoom-in button 64A and a zoom-out button 64B of the first simulation screen 60, and a zoom-in button 86A and zoom-out button 86B having the same function as those of described above respectively are provided. And using these buttons, the three-dimensional image picture 61 displayed on the preview column 81 can be turned in the direction of an arrow $a_1'$ to $a_4'$, and enlarged or small sized.

Then, the buyer judges whether the specification of the internal condition and action configuration of the pet robot 1 that he intends to buy is satisfactory or not based on the action patterns and sounds of the three-dimensional image picture 61 displayed on this second simulation screen 80 (step SP11).

Then, the prospective buyer may just click the cancel button 87 if the specification is not acceptable to him. And in this case, said question screen 70 (Fig. 12) is displayed again on the display of the personal terminal 31A to 31D based on the screen data to be transmitted from the server 38 afterwards. Thus, the prospective buyer can reselect the selection parts on each question item using this question screen 70.

On the other hand, if that specification is agreeable to the buyer, he may click the OK button 88. In this case, a contract screen (not shown in Fig.) on which the buyer is supposed to write in his personal information such as his name, address, telephone number, account number and E-mail address is displayed on the display of the personal terminal 31A to 31D in place of the second simulation screen 80 based on the screen data to be trnsmitted from the server 38.

Thus, the buyer, entering the necessary items in each fill-out part in this contract screen, can sign up a purchase contract for purchasing the pet robot 1 having the specification displayed as the three-dimensional image picture 61 on the second simulation screen 80 between the sales agent.

And thus, the purchase contract is concluded, and the sales agent, after storing the corresponding software in the memory 10A of the pet robot 1, packs said pet robot 1 and sends this out to the buyer (step SP12). Moreover, at the same time or afterwards, the sales agent collects the fee for this pet robot 1 from the buyer's account (step SP13).

With this arrangement, in the pet robot sales system 30, the buyer can order and receive the pet robot 1 having the specification fiting to his taste and living environment.

(1-3) Operation and Effects of the Present Embodiment

According to the foregoing construction, in this pet robot sales system 30, the buyer accesses to the server 38 by using the personal terminal 31A to 31D and selects the desired design on each changeable design item utilizing the design selection screen 50 to be displayed.

Then, the server 38, changing the design of standard pet robot 1 held by itself based on the buyer's selection, displays the simulation of said design changed pet robot 1. And the buyer judges whether that specification is satisfactory or not based on this simulation.

Furthermore, when the buyer accepts this simulation, the question screen 70 in which each question item and a plurality of selection parts on said question item are listed will be displayed on the display of the personal terminal 31A to 31D. Thus, the buyer successively selects answers to these questions.

At this point, the server 38 analyzes the buyer's answer to each question item thus entered. And as well as customizing various control parameters of the standard pet robot 1 possesed by itself based on the analysis result, displays the simulation of the pet robot 1 that conducts actions based on said customized various control parameters. Then, the user judges whether this specification is satisfactory or not based on this simulation, and if it is agreeable, the buyer orders the pet robot 1 having said specification.

Accordingly, in this pet robot sales system 30, since the buyer can buy the pet robot that fits to his taste and living environment, the buyer's attachment and feeling of intimacy to the pet robot 1 will be increased and the entertainment factor as the pet robot can be improved.

Furthermore, in this pet robot sales system 30, since the desired design selection and the pertinent answer selection on the design selection screen 50 and the question screen 70 can be conducted in an alternative way, the ordering process when the buyer is purchasing the pet robot according to his own taste and living environment can be facilitated.

Moreover, in this pet robot sales system 30, since the design formed by the CPU 42 of the server 38 and the customized result of various control parameters are to be displayed, the buyer can easily visualize what kind of pet robot 1 he is actually going to buy and he can buy the pet robot that is very close to his own ideal.

According to the foregoing construction, since the pet robot 1 having the specification reflecting the buyer's taste and living environment can be ordered, the buyer's attachment and feeling of intimacy to said pet robot 1 can be increased. And thus, the entertainment factor of the pet robot 1 can be enhanced.

(1-4) Other Embodiments

The embodiment described above has dealt with the case of applying the order receiving device and order receiving method according to the present invention to the pet robot sales system 30 that is the sales system of the pet robot 1 constructed as shown in Fig. 1. However, the present invention is not only limited to this but also can apply widely to other various virtual creatures and robotic devices other than the pet robot 1 conducting actions in the three-dimensional space or on the display and the robotic device.

Furthermore, the embodiment described above has dealt with the case of applying the order receiving device and its method to the pet robot sales system 30 conducting sales of the pet robot 1 to the prospective buyers. However, the present invention is not only limited to this but also it can be applied to the system that distributes only programs to the user who has a pet robot 1 already (or the hardware having the program of virtual creature) after customizing the programs as described above.

Furthermore, the embodiment described above has dealt with the case of applying the design and control program of the pet robot 1 as the changeable items. However, the present invention is not only limited to this but also items other than the design and control program may be included in the changeable items and this may be changed reflecting the prospective buyer's will.

In this case, if the sales target is a virtual creature that is held in the portable terminal gear such as a game machine and telephone as the software and acts on the display, the design and hardware of that portable terminal gear can be included as the changeable item.

Furthermore, the embodiment described above has dealt with the case of forming the transmission means for transmitting question data on the changeable items of the virtual creature or robotic device to the order sender, and the data processing means for conducting the data processing (according to this embodiment, such as the customizing process of various control parameters) to form the virtual creature or the robotic device by reflecting the order sender's answers to the questions by means of the CPU 42 having the same server 38. However, the present invention is not only limited to this but also the data processing means may be provided separately from the server 38.

Furthermore, according to the embodiment described above, "function parts", "dress-up parts", "color variation" and "pattern" are classified as the changeable design items, "emotion tendency", "instinct tendency", "character", "horoscope" and "zodiac signs" are classified as the changeable internal conditions, and "action", "motion", "sound" and "light emitting pattern" are classified as the changeable action configuration items. However, the present invention is not only limited to these but also items other than these may be classified as the changeable design items, changeable internal condition items and changeable action confiuration items.

In this case, the shapes and functions of the CCD camera 16 and various sensors such as touch sensor 17, LED may be classified as the changeable design item, and in the case where the virtual creature and the robotic device that "grow up", the growth level (the level of difficulty and complexity of action and motion) may be included as the changeable internal condition item.

Furthermore, the embodiment described above has dealt with the case of customizing the pet robot 1 by the server 38 reflecting both the buyer's taste and living environment. However, the present invention is not only limited to this but also the pet robot 1 may be customized reflecting either one of the buyer's taste and his living environment.

(2) The second Embodiment

(2-1) Construction of Pet Robot according to the Second Embodiment

(2-1-1) Construction of Pet Robot

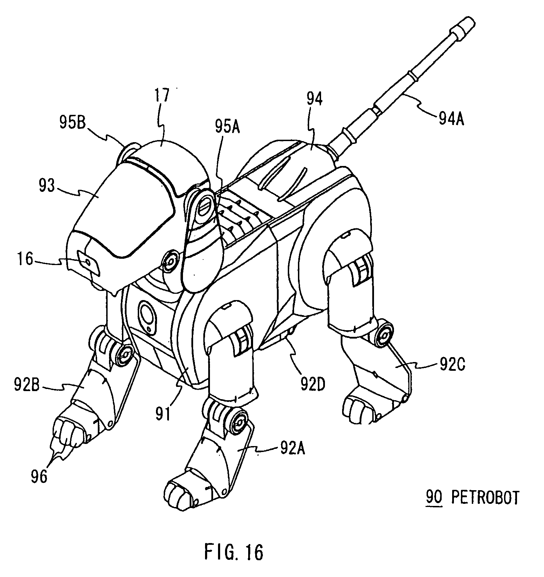

In Fig. 16, 90 generally shows a pet robot according to the embodiment of the present invention. In this pet robot 90, leg units 92A to 92D are connected to the front and rear parts and the right and left sides of the body unit 91, and a head unit 93 and a tail unit 94 are connected to the front edge and the rear edge of the body unit 91.

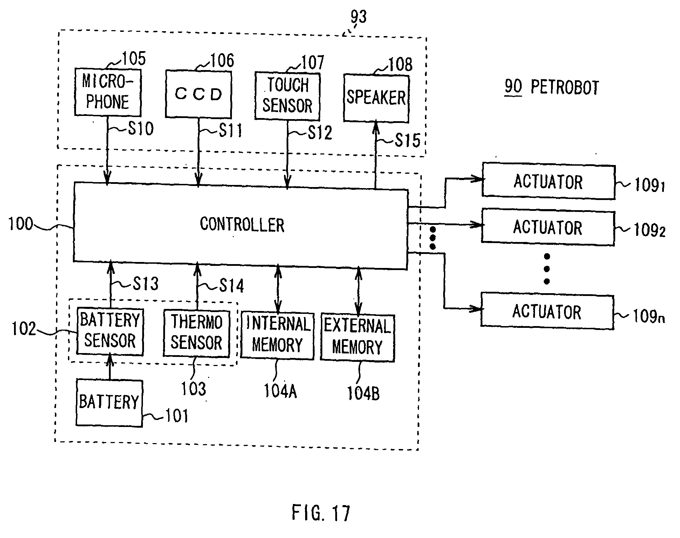

In this case, as shown in Fig. 17, in the body unit 91, a controller 100 to control the overall operation of this pet robot 90, a battery 101 to become the power source of this pet robot 90, and a battery sensor 102 and a thermo sensor 103, an internal memory 104A and an external memory 104B attached removable are stored.

Furthermore, a microphone 105 which is equivalent to "ear" of this pet robot, a CCD (Charge Coupled Device) camera 106, a touch sensor 107, and a speaker 108 which is equivalent to "mouth" are arranged on the predetermined positions in the head unit 93.

Moreover, actuators $109_1$ to $109_n$ are placed respectively onto joint parts of leg units 92A to 92D, connecting parts of leg units 92A to 92D and the body unit 91, the connecting part of the head unit 93 and the body unit 91, and connecting part of the tail unit 94 and the body unit 91.

Then, the microphone 105 of the head unit 93 collects the command sound such as "walk", "lie Down" or "chase after a ball" to be given as musical scales via the sound commander (not shown in Fig.) from the user, and transmits the resulting audio signal S10 to the controller 100. Moreover, the CCD camera 106 photographs the surrounding condition and transmits the resulting image signal S11 to the controller 100.

Furthermore, as is clear from Fig. 16, the touch sensor 107 is placed on the upper part of the head unit 93, and detecting the pressure received from the user by the physical action such as "pat" and "hit", transmits the detection result to the controller 100 as a pressure detection signal S12.

Moreover, the battery sensor 102 of the body unit 91 detects the energy remaining quantity of the battery 101 and transmits the resultant to the controller 100 as a battery remaining quantity detection signal S13. The thermo sensor 103 detects the internal heat of the pet robot 90 and transmits the resultant to the controller 100 as a thermo detection signal S14.

The controller 100 judges the surrounding condition and the existence or non-existence of the command and action from the user based on the audio signal S10, the image signal S11, the pressure detection signal S12, the battery remaining quantity detection signal S13 and the thermo detection signal S14 to be supplied from the microphone 105, the CCD camera 106, the touch sensor 107, the battery sensor 102 and the thermo sensor 103.

Then, the controller 100 determines the following action based on the judgment result and the control program stored in the internal memory 104A in advance and various control data stored in the external memory 104B in advance. And the controller 100, by driving the

necessary actuators $109_1$ to $109_n$ based on the determination result makes the robot conduct the action or motion, such as making the head unit 93 swing up and down and right and left, the tail unit 94 wag, and the robot walk by driving each leg unit 92A to 92D. In the following chapters, a set of motions will be defined as an action and this will be used.

Furthermore, in this case the controller 100, forming the audio signal S15 and giving this to the speaker 108 as occasion demands, outputs the sound based on said audio signal S15 and flashes the LED (Light Emitting Diode) (not shown in Fig.) provided on the position of "eye" of the pet robot.

[22] Thus, this pet robot 90 is designed so that it can act autonomously based on the surrounding condition, the contol program and control parameter stored in the internal memory 104A and the external memory 104B.

(2-1-2) Software Configuration of Control Program

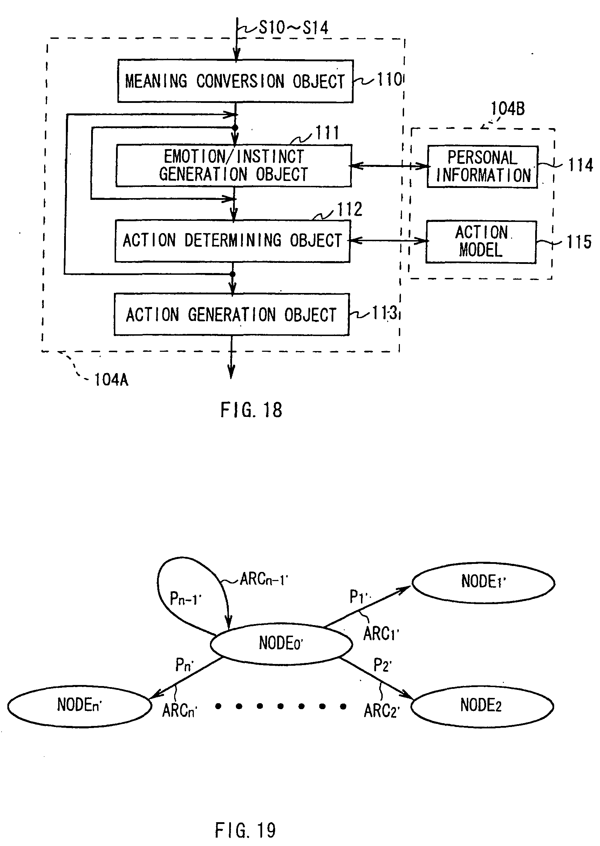

At this point, the software configuration of said control. program in the pet robot 90 will be shown in Fig. 18. As is obvious from this Fig. 18, the control program is comprised of a meaning conversion object 110, an emotion/instinct generation object 111, an action determining object 112 and an action generation object 113.

In this case, the meaning conversion object 110 enters the audio signal S10, image signal S11, pressure detection signal S12, battery remaining quantity signal S13 and the thermo detection signal S14 to be given from the microphone 105, CCD camera 106, touch sensor 107, battery sensor 102 and the thermo sensor 103. And based on these, the meaning conversion object 110 recognizes the specific external condition and the internal condition such as "is hit", "is patted", "detect a ball", "short of battery remaining quantity", "internal temperature becomes high", and notifies the recognition result to the emotion/instinct generation object 111 and the action determining object 112.

The emotion/instinct generation object 111 determines the emotion and instinct conditions of the pet robot 90 based on the recognition result to be given from the meaning conversion object 110, the personal information 114 stored in the external memory 104B, and the notification showing the executed action to be given from the action determining object 112 that will be described later. And when said emotion and instinct condition exceeds the predetermined level, the emotion/instinct generation object 111 informs this to the action determining object 112.

More specifically, the emotion/instinct generation object 111 comprises an emotion model having 6 parameters showing the strength of each emotional action, such as "joy", "sadness", "anger", "surprise", "fear" and "disgust", and an instinct model having 4 parameters showing the strength of each desire, such as "desire for love", "desire for search", "desire to exercise" and "appetite" respectively.

Furthermore, in the external memory 104B, as the personal information 114 the recognition result of the meaning conversion object 110, such as when it is "hit", the parameter of "anger" increases and the parameter of "joy" decreases, and when it is "patted", the parameter of "joy" increases while the parameter of "anger" decreases, and when it discovers some action, as well as increasing the parameter of "desire to exercise", increases the parameter of "joy", and the control data as to which parameter value of emotional action or desire would be increased or decreased with respect to the notice informing that the action from the action generation object 113 has been conducted (will be described later) are stored.

Then, the emotion/instinct generation object 111 changes the parameter value of the corresponding emotional action or desire of the emotion model or the instinct model periodically based on the recognition result to be given from the meaning conversion object 110 and the notice from the action detrmining object 112 based on the personal information.

More specifically, regarding each emotional action, the emotion/instinct generation object 111 calculates the parameter value of the next cycle of that emotional action $E_{(n)}'$ as follows:

$$E_{(n)}' = k_e' \times P' + E_{(n-1)}' \qquad (3)$$

Where the parameter value of the immediately preceding cycle of that emotional action is taken to be $E_{(n-1)}'$; the value to be obtained by the predetermined computation based on the recognition result given during that cycle and the notice contents from the action determining object 112 to be P'; and the coefficient value showing the sensitivity preset to that emotional action to be $k_e'$. Then, it changes that emotional action parameter value to this parameter value $E_{(n)}'$.

Furthermore, the emotion/instinct generation object 111 calculates the parameter value of the next cycle of that desire $I_{(n)}'$ on each desire according to the following Equation:

$$I_{(n)}' = k_i' \times Q' + I_{(n-1)}' \qquad (4)$$

Where the parameter value of immediately preceding cycle of that desire to be $I_{(n-1)}'$; the value to be obtained by the predetermined calculation based on the recognition result given during that cycle and the notification contents from the action determining object 112 to be Q; and the coefficient value showing the sensitivity set in advance to that desire to be $k_i'$. Then, it changes that desire parameter value to this parameter value $I_{(n)}'$.

Then, when either of the parameter values of emotion or desire parameter exceeds the value set to the emotion or instinct in advance as a result of the updating processing of parameter value, the emotion/instinct generation object 111 informs this to the action determining object 112.

When the recognition result is supplied from the meaning conversion object 110 and the notification is given from the emotion/instinct generation object 111, the action determining object 112 determines the action to be followed based on the action model 115 stored in the external memory 104B and informs the determination result to the action generation object 113.

More specifically, as shown in Fig. 19, as the method to determine the next action the action determining object 111 uses an algorithm called as "probability automaton" that determines in probability as to one node $NODE_0'$ to $NODE_n'$ would be transitted to which other node $NODE_0'$ to $NODE_n'$ based on the. transition probability $P_1'$ to $P_{n+1}'$ set respectively to arcs $ARC_1$ to $ARC_{n+1}$ connecting between each node $NODE_0'$ to $NODE_n'$.

Moreover, the transition condition to other nodes per each node and the control data such as the transitting end and the transition probability to that transitting end are put in files and stored in the external memory 104B.

With this arrangement, when the recognition result is given from the meaning conversion object 110 for example, the action determining object 111 determines that the node selected at that time $NODE_0'$ to $NODE_n'$ would be transitted to which node $NODE_0'$ to $NODE_n'$ by using the action model 115, and informs the action compatible with the path at that time, the arc $ARC_1'$ to $ARC_{n+1}'$, to the action generation object 113.

The action generation module 113 controls the corresponding actuators $109_1$ to $109_n$, or forming the corresponding audio signal S15 (Fig. 17), outputs this to the speaker 108, or flashes the LED placed on the position of "eye" of the pet robot in the light emitting pattern as occasion demands so that the pet robot 90 conducts the specified action based on the notice from the action determining module 112.

Thus, the pet robot 90 can conduct the autonomical action in accordance with its own and surrounding conditions, commands or actions from the user based on various control data such as the control program stored in the internal memory 104A, and the personal information 114 and action model 115 stored in the external memory 104B.

(2-2) Construction of Data Sales System 120 according to the Embodiment of the Present Invention

(2-2-1) Construction of Data Sales System 120

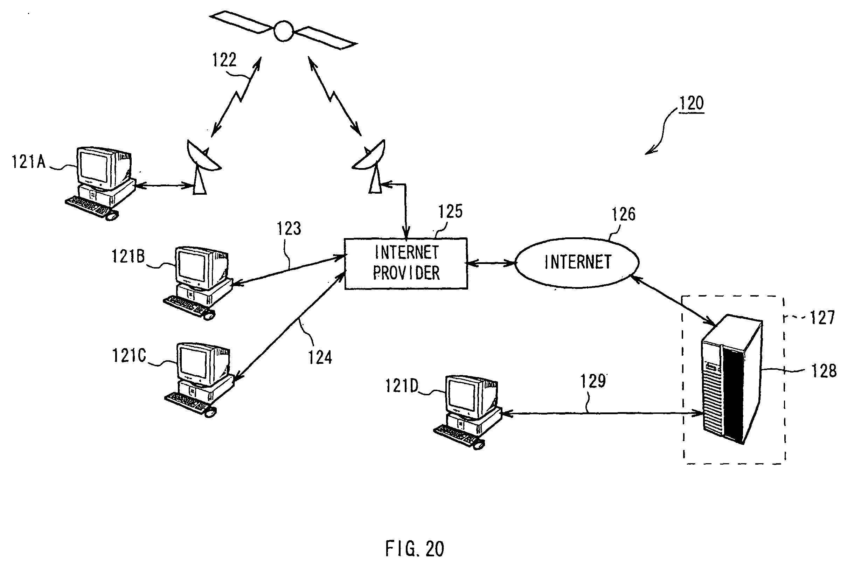

Here, Fig. 20 shows a network system (hereinafter referred to as data sales system) 120. The user forms a series of action patterns to be performed by the pet robot 90 when expressing its emotion such as "joy" and "sadness" and that control data can be sold to other users according to said data sales system.

In such data sales system 120, personal terminals 121A to 121C are connected to the Internet provider 125 via the satellite communication circuit 122, the cable television circuit 123, or the telephone line 124. And simultaneously, said Internet provider 125 is connected to the server 128 provided by the sales agency 127 via the Internet 126 and personal terminal 121D is directly connected to said server 128 through the general public line 129.

In this case, each personal terminal 121A to 121D is an ordinary personal computer set in the general household. And this is arranged so that it can communicate with the server 128 through the Internet 126 or the general public line 129 and can transmit/receive the necessary data between said server 128.

Moreover, the server 128 is a Web server to conduct various processings in the case where the sales agency 127 is conducting the consignment sales on the control data of the action pattern of the pet robot 90 formed by the general user. And this server 128 can transmit various screen data to the personal terminal 121A to 121D who accessed via the Internet 126 or the general public line 129, and forming the necessary image data, can display the image based on said image data on the corresponding screen (to be described later).

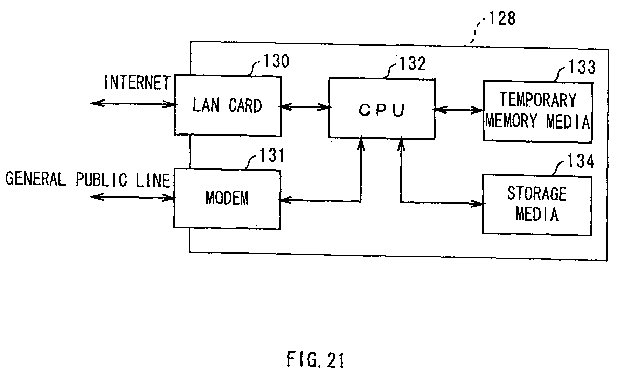

In this connection, the construction of this server 128 will be shown in Fig. 21. It is obvious from this Fig. 21, the server 128 comprises a LAN (Local Aread Network) card 130 in which the interface circuit for Internet is built in, a modem as the interface circuit for the general public line, a CPU 132 to control the overall control of the server 128, a temporary memory media 133 formed of semi-conductor memory as the work memory of the CPU 132, and a storage media 134 such as the hard disc device in which various data for the server 128 conduct the processing are stored or will be stored, and that will be described later.

Then, the server 128 captures data and command to be supplied from the personal terminal 121A to 121D who accessed via the Internet 126 or the general public line 129 into the CPU 132 via the LAN card 130 or the modem 131, and it executes the predetermined processing based on said data and command and the control data stored in the storage media 134.

Then, the CPU 132 forms screen data of various screens, such as to be described later, based on this processing result, and transmits this to the corresponding personal terminal 121A to 121D via the LAN card 130 or the modem 131.

(2-2-2) Control Data Registration and Purchasing Procedure

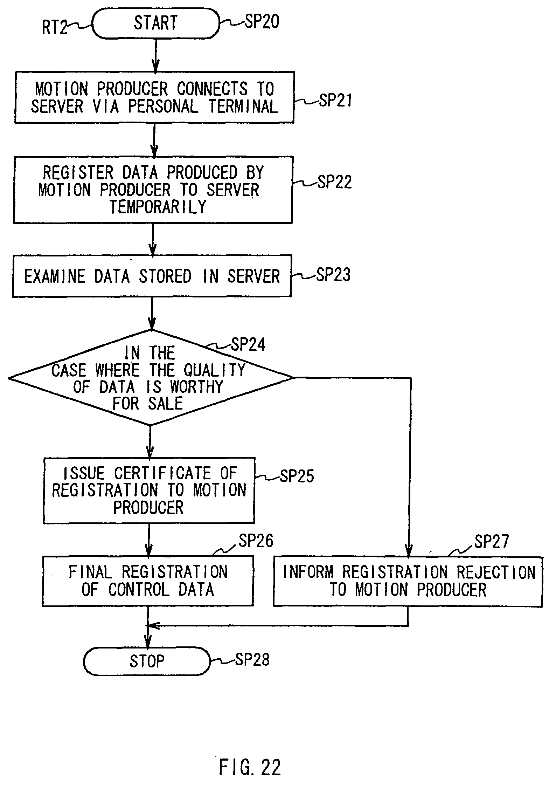

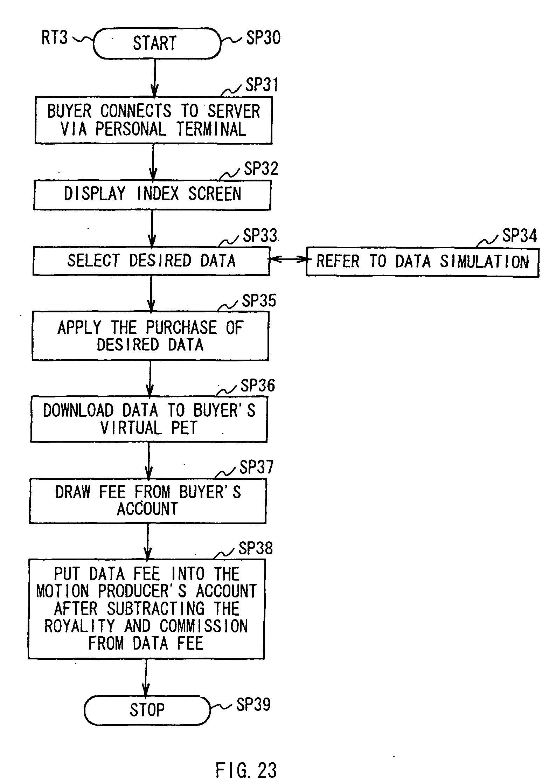

Next, the registration and purchasing procedure of the control data of action pattern in this data sales system 120 will be explained. In this data sales system 120, the control data of action pattern of the pet robot 90 formed by the user can be registered onto the server 128 according to the data registration procedure RT2 shown in Fig. 22. And the other user can purchase the control data of said action pattern registered in accordance with the control data purchasing procedure RT3 shown in Fig. 23.

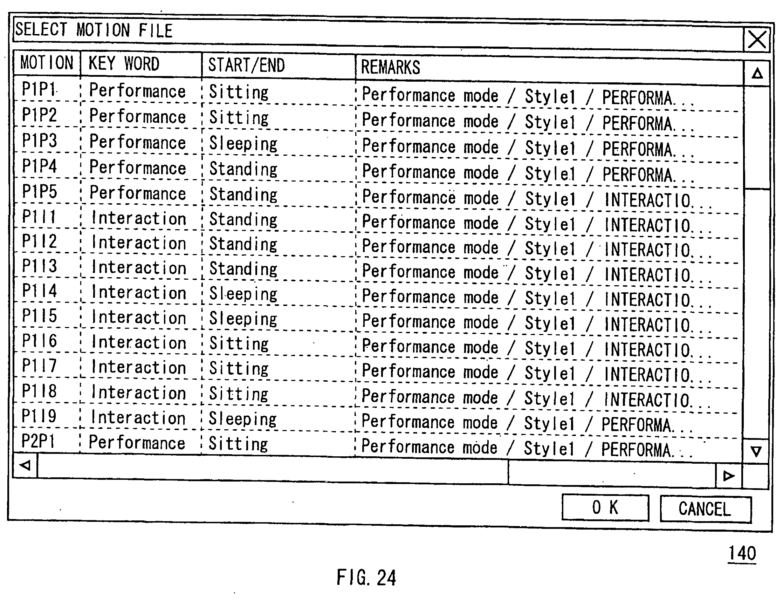

In practice, in this data sales system 120, a display window (hereinafter referred to as a motion file display window) 140 on which all motions that the pet robot 90 can conduct are displayed on the display of the personal terminal 121A to 121D as shown in Fig. 24 based on the predetermined program being sold in the form of such as CD-ROM and download. Or by selecting one motion from among various motions displayed on said motion file display window 140, this motion can be displayed as the motion of three-dimensional simulation image.

Moreover, in this data sales system 120, the user can select a plurality of motions based on the motion of such three-dimensional image and sequentially arranging these on the time line (not shown in Fig.), can form a series of action patterns. And thus, the control data formed of a part of said action model 115 to make the pet robot 90 conduct said action pattern can be stored in the hard disc in the personal terminal 121A to 121D.

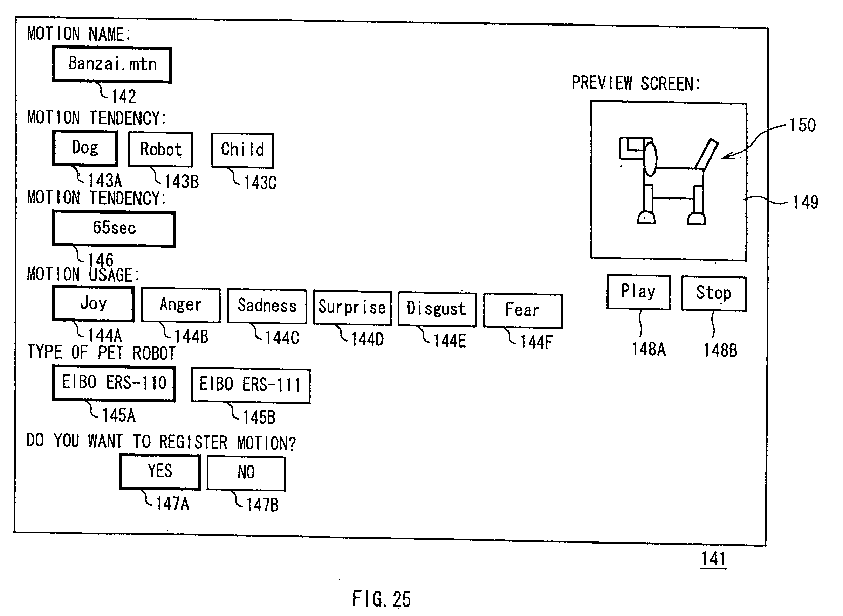

Then, in the data sales system 120, when the user is going to register the action pattern of the pet robot 90 he created (hereinafter this user is referred to as a motion producer) to the server 128 of the sales gency 127, firstly, the motion producer accesses to the server 128 (step SP21) using the personal terminal 121A to 121D and transfers the control data of action pattern to be registered to the server 128. As a result, the data registration screen 141 as shown in Fig. 25 is displayed on the display of the personal terminal 121A to 121D based on the screen data transmitted from the CPU 132 of the server 128.

At this point, in the data registration screen 141, the motion name description column 142 for describing the names of action patterns (motion names) that the motion producer is going to register, the plural number of selection buttons 143A to 143C for the motion producer specifying to which action tendencies classified by the sales agent in advance, such as dog, robot or child, the plural number of selection buttons 144A to 144F for the motion producer specifying which emotional action expresses which action pattern (motion usage), and the plural number of selection buttons 145A, 145B for the motion producer specifying the type of pet robot 90 applying that action are displayed. Moreover, the time of that action pattern detected by the CPU 132 of the server 128 is displayed in the motion time display column 146.

Then, the data producer describes the name of that action pattern in the motion name description column 142 of this data registration screen 141, and after selecting the applicable selection part by clicking the corresponding selection buttons 143A to 143C, 144A to 144F, 145A and 145B respectively on each item such as the name of motion, the tendency of motion, the usage of motion and the type of robot, clicks the OK button 147A. Thus, the control data.of that action pattern can be temporarily registered in the server 128 (step SP22). Moreover, if the data producer wants to cancel the registration of that control data, he clicks the cancel button 147B.

In this data registration screen 141, by clicking the play button 148A displayed on the right side of the screen, the user can cause the three-dimensional image screen 150 of the pet robot 90 displayed in the preview column 149 to act the same action as the action pattern to be registered, and by clicking the stop button 148B, he can make it stop that action.

Then, the control data of action pattern temporarily registered in the server 128 will be examined by the sales agency 127 (step SP23) and the quality of that action pattern will be judged whether it is worthy for sale or not (step SP24). In this connection, the judgment whether this is worthy for sale or not would be conducted according to the operating condition of the control data (program) and the existence or non-existence of bug, and after attaching such control data to the pet robot 90, confirming its operation, and also judged from public morals.

Then, in the case where this sales agency 127 judges that the control data of the action pattern is worthy for sale, the sales agent 127 issues a certificate of registration to the motion producer (step SP25), and the control data of that action pattern will be finally registered (step SP26). And if the sales agency 127 judges that it is not worthy for sale, the sales agency 127 informs that the registration is not accepted to the motion producer and that control data will be destroyed (step SP27).

On the other hand, as to the control data of the action pattern thus registered in the server 128, the other user can purchase this according to the control data purchasing procedure RT3 shown in Fig. 23.

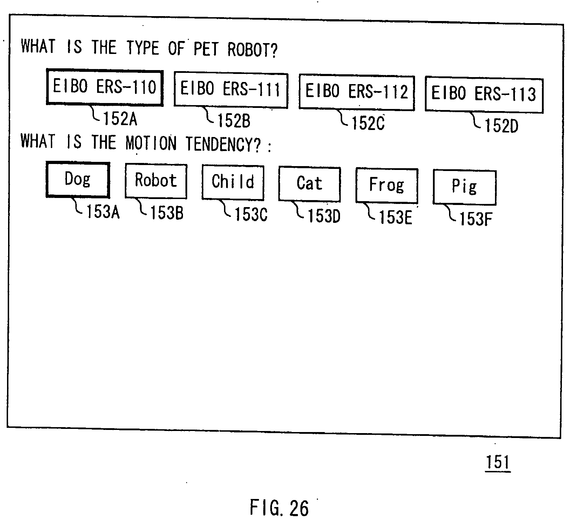

More specifically, the user who is willing to purchase (hereinafter referred to as buyer) the control data of the action pattern produced by the user (motion producer), by accessing to the server 128 by means of the personal terminal 121A to 121D, displays the classification specification screen 151 as shown in Fig. 26 on the display of said personal terminal 121A to 121D (step SP31)..

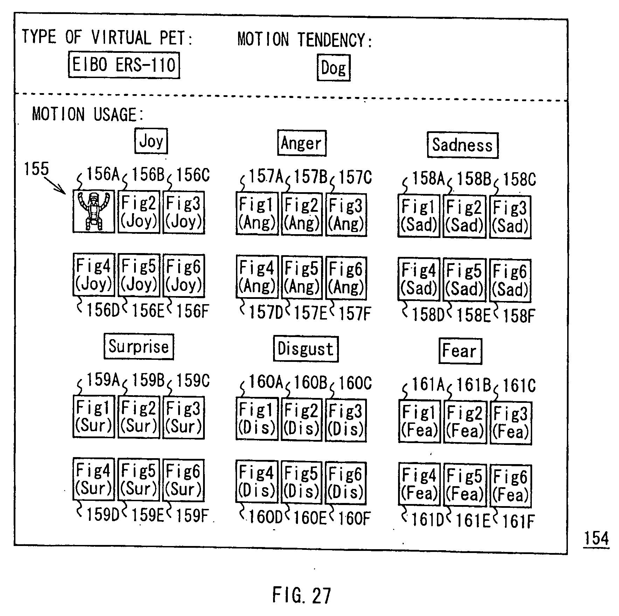

Then, the buyer clicks the applicable selection buttons 152A to 152D, 153A to 153F respectively responding to the questions asking such as the type of the pet robot 90 possessed by the buyer and the desired motion tendency displayed on the classification specification screen 151. As a result, an index screen 154 as shown in Fig. 27 is displayed on the display of the personal terminal 121A to 121D (step SP32).

In this index screen 154, as described in Fig. 22, the action pattern corresponding to the type of pet robot 90 owned by the buyer and specified in the classification specification screen 151 and the motion tendency that the buyer desires is selected from a plurality of action patterns registered in the server 128, and these action patterns are classified into each emotional action such as "joy", "anger", "sadness", "surprise", "disgust" and "fear" and these image pictures of the characteristic poses of each action pattern, such as specified by the sales agent, are displayed in the corresponding image picture display columns 156A to 156F, 157A to 157F, 158A to 158F, 159A to 159F, 160A to 160F, 161A to 161F, 162A to 162F, 163A to 163F.

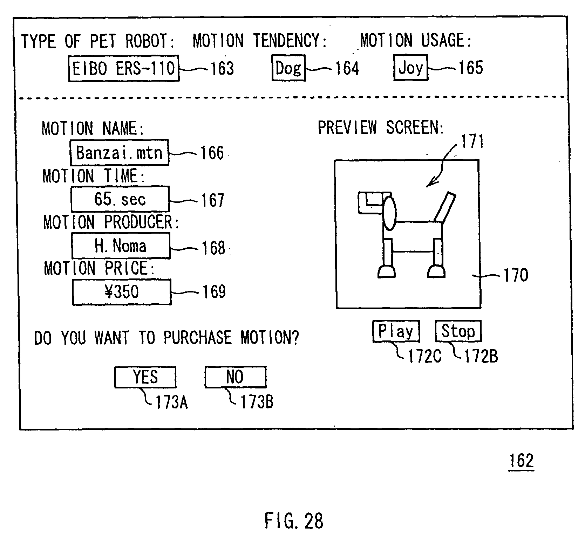

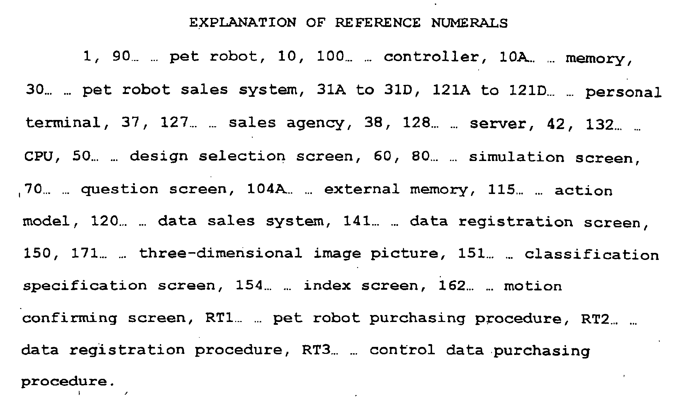

Then, the buyer selects the desired action pattern by clicking the corresponding image picture display column 156A to 156F, 157A to 157F, 158A to 158F, 159A to 159F, 160A to 160F, 161A to 161F, 162A to 162F, 163A to 163F based on the image picture 155. As a result, the motion confirming screen 162 is displayed on the display of the personal terminal 121A to 121D as shown in Fig. 28.

In this motion confirming screen 162, the type of pet robot 90 owned by the buyer specified in the classification specification screen 151 (Fig. 26) and the motion tendency that the buyer desires and the motion usage of the action pattern selected by the buyer in the index screen 154 (Fig. 27) are displayed respectively in the robot type display column 163, the motion tendency display column 164 and the motion usage display column 165. And also the name of motion and the time of motion of the action pattern selected by the buyer in the index screen 154, the name of motion producer (data producer) and the sales price will be displyed in the motion name display column 166, the motion time display column 167, the motion producer display column 168 and the sales price display column 169 respectively.

Moreover, in this motion confirming screen 162, a three-dimensional image picture 171 of the pet robot 90 formed by the CPU 132 of the server 128 based on the image data of the computer graphics (CG: Computer Graphics) stored in the storage media 134 of the server 128 (hereinafter referred to as computer graphic image data) is displayed in the preview column 170 of the right side of the screen, and a play button 172A and a stop button 172B are displayed on the lower part of that screen.

In this motion confirming screen 162, by clicking the play button 172A, the buyer can make the three-dimensional image picture 171 of the pet robot 90 conduct the motion of the action pattern that the buyer selected on the index screen 154.

In practice, at this moment the CPU 132 of the server 128 reads out the control data of the action pattern selected by the user from among control data of registered various action patterns stored in storage media 134 in advance, and conducting the CG processing based on said control data, forms computer graphic image data that can make the three-dimensional image picture 171 of the pet robot 1 conduct that action pattern and transmits this to the corresponding personal terminal 121A to 121D. As a result, based on this computer graphic image data the three-dimensional image picture 171 of the pet robot 90 displayed on the preview column 170 of the motion confirming screen 162 is displayed moving as if it is performing such action pattern.

Furthermore, when the stop button 172B is clicked under such condition, the CPU 132 of the server 128 forms a computer graphic image to stop the action of the three-dimensional image picture 171 of the pet robot 90 displayed on the preview column 170 of the motion confirming screen 162 and transmits that computer graphic image data to corresponding personal terminal 121A to 121D. As a result, based on this computer graphic image data the three-dimensional image picture 171 of the pet robot 90 is displayed its action stopped.

Then, the prospective buyer judges whether to purchase the control data of that action patern or not based on the motion of this three-dimensional image picture 171. And if he does not want to purchase this, he clicks the cancel button 173B. In this case, the index screen 154 is displayed again on the display of the personal terminal 121A to 121D. Accordingly, in utilizing these index screen 154 and the motion confirming screen 162, the buyer can select the control data of the action pattern by visually confirming the desired action pattern as the motion of three-dimensional image picture 171 of the pet robot 90 displayed in the preview column 170 (steps SP33 and SP34).

On the other hand, when the prospective buyer wants to buy the control data of the action pattern having the motion of three-dimensional image picture 171 of the pet robot 90 displayed on the preview column 170, he clicks the OK button 173A of the motion confirming screen 162. As a result, a purchase application screen (not shown in Fig.) in which necessary items such as the buyer's name, address, telephone number and account number can be filled out will be displayed on the display of the personal terminal 121A to 121D.

Then, by filling out the necessary items in the purchase application screen the buyer can apply the purchase of the control data of the action pattern selected as described above (step SP35). As a result, that control data will be transferred to the personal terminal 121A to 121D and stored (download) in the hard disc in said personal terminal 121A to 121D (step SP36).

Furthermore, when such download is conducted, the CPU 132 of the server 128 draws out the fee from the buyer's account (step SP37), and subtracting the rotalty and the handling charge of the sales agency 127 from said fee, the CPU 132 of the server 128 puts the remaining fee into the account of the motion producer of that action pattern (step SP38).

Thus, in this data sales system 128, th control data of the action pattern produced by the user (motion producer) can be sold to other users (buyers).

Then, the buyer installs an external memory 104B (Fig. 17) of the pet robot 90 into the personal terminal 121A to 121D, and as well as storing the control data downloaded as described above in this external memory 104B, edits the corresponding part of the action model 115 (Fig. 18) stored in advance in said external memory 104B. Thus, he can make the pet robot 90 conduct the action pattern purchased as described above.

(2-2-3) Operation arid Effects of the Present Embodiment

According to the foregoing construction, in this data sales system 120, the motion producer who produced the action pattern of the pet robot 90 registers this temporarily to the server 128 of the sales agency 127, and the sales agency 127 examines its quality and if the sales agent determines that it is worthy for sale, that action pattern is finally registered in the server 128.

Moreover, the user who wants to purchase the control data of the action pattern thus registered in the server 128 accesses to this server 128 using the personal terminal 121A to 121D. Thus, the user selects the desired action pattern by using the index screen 154 and the motion confirming screen 162 displayed on the display of said personal terminal 121A to 121D, and applies the purchase of that action pattern.

As a result, the control data of that action pattern is transferred to that personal terminal 121A to 121D from the server 128 and stored in the hard disc of said personal terminal 121A to 121D. Thus, by storing this action data in the external memory 104 of the pet robot 90, the buyer can make that pet robot 90 conduct actions based on said action data.

Accordingly, in this data sales system 120, since the user produces the action pattern of the pet robot 90 and can sell this to other users, the high quality action pattern can be easily formed. Moreover, since the other user can enjoy that action pattern, the amusingness of the pet robot 90 can be increased.

Furthermore, in this data sales system 120, since the buyer can simulate the action pattern on th motion confirming screen 162 when he is buying the control data of the action pattern, he can visually confirm the actual motion of that action pattern as to how actually it moves. Thus, the buyer's selection work of that action pattern becomes easier and the buyer certainly can purchase the control data of the action pattern that he desires.

According to the foregoing construction, since the user producing the action pattern of the pet robot 90 and selling this to other users, makes the pet robot 90 owned by the other user conduct the action of said action pattern, the entertainment factor of the pet robot 90 can be increased. And thus, the data sales system capable of increasing the entertainment factor of the pet robot 90 can be realized.

(2-2-4) Other Embodiments

The embodiment described above has dealt with the case of applying the present invention to the data sales system 120 for selling on consignment the control data of the action pattern of the pet robot 90. However, the present invention is not only limited to this but also, in shart it can be widely applied to various other data sales devices for selling a part of data in the virtual creature held as a software in the hardware and conducts actions or motions based on said software and the control data of the robotic device for conducting actons or motions based on the predetermined control data. In this case, as a part of data of virtual creature, data may not be only the data for controlling the actions or motions of said virtual creature, but the data may be related to a part or the whole design of the virtual creature for example.

Furthermore, the embodiment described above has dealt with the case of constructing the server 128 as the data sales device according to the present invention as shown in Fig. 21. However, the present invention is not only limited to this but also various other constructions can be widely applied.

Furthermore, the embodiment described above has dealt with the case of applying the control data of the action pattern for expressing each emotional action of the pet robot 90 as the control data to be sold on consignment. However, the present invention is not only limited to this but also sound data, action model 115, light emitting pattern data, the control data to control the posture transition, and a part or all of the control program such as the middle-ware and the device driver may be regarded as the control data to be sold on consignment.

Furthermore, the embodiment described above has dealt with the case of accepting the consignment and selling the control data produced by the general user via the Internet 126. However, the present invention is not only limited to this but also the.control data produced by the general user may be accepted the consignment and sold via the other network such as LAN and the public telephone line net.

Moreover, the embodiment described above has dealt with the case of constructing the consignment accepting means for accepting the consignment of control data of the pet robot 90 formed by the general user and the selling means for selling said control data by one server 128. However, the present invention is not only limited to this but also these may be formed by separate servers.

Moreover, the embodiment described above has dealt with the case where the sales agency 127 examines the control data of the action pattern temporarily registered in the server 128 at the step SP23 of Fig. 22. However, the present invention is not only limited to this but also such examination may be conducted by the person other than the sales agency 127. Moreover, such examination may be conducted automatically by the server 128 using the software.

Furthermore, as the contents of examination, the embodiment described above has dealt with the case of confirming the operating condition of the control data (program) and the existence or non-existence of bug, and further by attaching the control data to the pet robot 90, confirming its motion, and further examining this from the standpoint of public morals. However, the present invention is not only limited to this but also items other than these may be examined.

INDUSTRIAL UTILIZATION

The present invention relates to a purchasing system and method, an order receiving device and method, a data agent sales system and method, a data sales device and method and a computer program, and can be applied to such as a sales system for selling the pet robot and its motion data via the network.

**Claims**

1. A Purchasing system for purchasing a virtual creature existing as a software and programmed to act or move, comprising:

   first communication means provided on the order sender side of said virtual creature;
   second communication means provided on the order receiving side of said virtual creature; and
   a communication path to connect between said first and the second communication means; wherein
   said second communication means, comprising:

   question data transmission means for transmitting question data regarding changeable items in said software of said virtual creature and/or hardware holding a recording medium in which said software is stored to said first communication means that accessed via said communication path; and
   data processing means for conducting the predetermined data processing in order to form said virtual creature and/or said hardware reflecting the order sender's answer to said question to be transmitted from the first communication means via said communication path.

2. The purchasing system according to Claim 1, wherein
   said changeable item is the specification on said action or motion of said virtual creature.

3. The purchasing system according to in Claim 1, wherein
   said changeable item is the design of said virtual creature or said hardware.

4. The purchasing system according to Claim 1, wherein
   said data processing means analyzes the taste and/or the living environment of said order sender based on said order sender's answer to said question and conducts the data processing according to the analysis result.

5. The purchasing system according to Claim 1, wherein
   said data processing means forms the image data of computer graphic image of said virtual creature and/or said hardware reflecting said order sender's answer to said question, and transmits said image data to the first communication means via said communication path.

6. A purchasing method for purchasing a virtual creature existing as a software and programmed to act or move, comprising:

   a first step of the first communication means provided on the order sender side of said virtual creature accessing to the second communication means provided on the order receiver side of said virtual creature;
   a second step of the second communication means transmit question data regarding changeable items in said software of said virtual creature and/or the hardware holding a recording medium in which said software is stored to the first communication means that accessed; and
   a third step for conducting the predetermined data processing to form said virtual creature and/or said hardware in said second communication means reflecting said order sender's answer to said question to be transmitted from said first communication means to said second communication means.

7. The purchasing method according to Claim 6, wherein
   said changeable item is the specification on the action or the motion of said virtual creature.

8. The purchasing method according to Claim 6, wherein
   said changeable item is the design of said virtual creature or said hardware.

9. The purchasing method according to Claim 6, wherein

said third step analyzes the taste and/or the living environment of said order sender based on said order sender's answer to said question, conducts said data processing according to said analysis result.

10. The purchasing method according to Claim 6, wherein

said third step forms the image data of the computer graphic image of said virtual creature and/or said hardware reflecting said order sender's answer to said question as said data processing, transmits said image data to the first communication means.

11. The order receiving device for receiving an order of a virtual creature existing as a software and programmed to act or move, comprising:

question data transmission means for transmitting question data regarding changeable items in said software of said virtual creature and/or the hardware holding a recording medium in which said software is stored to the order sender who accessed via the predetermined communication path; and
data processing means for conducting the predetermined data processing to form said virtual creature and/or said hardware by reflecting the order sender's answer to said question.

12. The order receiving device according to Claim 11, wherein

said changeable item is the specification on the action or the motion of said virtual creature.

13. The order receiving device according to Claim 11, wherein

said changeable item is the design of said virtual creature or said hardware.

14. The order receiving device according to Claim 11, wherein

said data processing means analyzes the taste and/or the living environment of said order sender based on said order sender's answer to said question, conducts the data processing according to said analysis result.

15. The order receiving device according to Claim 11, wherein

said data processing means forms image data of the computer graphic image of said virtual creature and/or said hardware by reflecting said order sender's answer to said question, transmits said image data to an order sender.

16. The order receiving method for receiving a virtual creature existing as a software and programmed to act or move, comprising:

a first step for transmitting question data regarding changeable items in said software of said virtual creature and/or the hardware having a recording medium in which said software is stored to the order sender who accessed via the predetermined communication path; and
a second step for conducting the predetermined data processing to form said virtual creature and/or said hardware by reflecting said order sender's answer to said question.

17. The order receiving method according to Claim 16, wherein

said changeable item is the specification regarding said action or motion of said virtual creature.

18. The order receiving method according to Claim 16, wherein

said changeable item is the design of said virtual creature or said hardware.

19. The order receiving method according to Claim 16, wherein

said second step analyzes said order sender's taste and/or living environment based on said order sender's answer to said question, conduct said data processing according to said analysis result.

20. The order receiving method according to Claim 16, wherein

said second step as said data processing forms image data of the computer graphic image of said virtual creature and/or said hardware reflecting said order sender's answer to said question, transmits said image data to said order sender.

21. A computer program for making the computer execute the processing to order a virtual creature existing as a software and programmed to act or move, comprising:

a first step for transmitting question data regarding changeable items in said software of the virtual creature and/or the hardware holding a recording medium in which said software is stored to the order sender who accessed via the predetermined communication path; and
a second step for conducting the predetermined data processing to form said virtual creature and/or said hardware by reflecting said order sender's answer to said question.

22. The computer program according to Claim 21, wherein

said changeable item is the specification regarding the action or motion of said virtual creature.

23. The computer program according to Claim 21, wherein

said changeable item is the design of said virtual creature or said hardware.

24. The computer program according to Claim 21, wherein

said second step analyzes said order sender's taste and/or living environment based on said order sender's answer to said question, conducts said data processing according to said analysis result.

25. The computer program according to Claim 21, wherein:

said second step as said data processing, forms image data of the computer graphic image of said virtual creature and/or said hardware reflecting said order sender's answer to said question, transmit said image data to said order sender.

26. A purchasing system for purchasing a robotic device to act or move based on the predetermined program, comprising:

first communication means provided on the order sender side of said robotic device;
second communication means provided on the order receiver side of said robotic device; and
a communication path for connecting said first and the second communication means; wherein:

said second communication means, comprising:

question data transmitting means for transmitting question data on changeable items of said robotic device to said first communication means that accessed via said communication path through said communication path; and
data processing means for conducting the predetermined data processing to construct said robotic device by reflecting said order sender's answer to said question to be transmitted from said first communication means via said communication path.

27. The purchasing system according to Claim 26, wherein

said changeable item is the specification regarding said action or motion of said robotic device.

28. The purchasing system according to Claim 26, wherein

said changeable item is the design of said robotic device.

29. The purchasing system according to Claim 26, wherein

said data processing means analyzes said order sender's taste and/or the living environment based on said order sender's answer to said question, conducts said data processing according to the analysis result.

30. The purchasing system according to Claim 26, wherein

said data processing means as the data processing, forms image data of the computer graphic image of said virtual creature and/or said hardware reflecting said order sender's answer to said question, transmits said image data to the first communication means via the communication path.

31. A purchasing method for purchasing a robotic device what acts or moves based on the predetermined program, comprising:

a first step of the first communication means provided on the order sender side of the robotic device accessing to the second communication means provided on the order receiver side of said robotic device;
a second step for transmitting question data on changeable items of said robotic device to the first communication means from the second communication means; and
a third step for conducting the predetermined data processing to construct said robotic device at said second communication means by reflecting the order sender's answer to said question to be transmitted to said second communication means from said first communication means.

32. The purchasing method according to Claim 31, wherein

said changeable item is the specification on said action or motion of said robotic device.

33. The purchasing method according to Claim 31, wherein

said changeable item is the design of said robotic device.

34. The purchasing method according to Claim 31, wherein

said third step analyzes said order sender's taste and/or the living environment based on said order sender's answer to said question, conducts said data processing according to said analysis result.

35. The purchasing method according to Claim 31, wherein

said third step as the data processing forms image data of the computer graphic image of said robotic device by reflecting said order sender's answer to said question, transmits said image data to the first communication means.

36. An order receiving device for receiving an order of the robotic device that acts or moves based on the predetermined program, comprising:

question data transmission means for transmitting question data on changeable items of said robotic device to the order sender who accessed via the predetermined communication path; and

data processing means for conducting the predetermined data processing to construct said robotic device by reflecting said order sender's answer to said question.

37. The order receiving device according to Claim 36, wherein

said changeable item is the specification on said action or motion of said robotic device.

38. The order receiving device according to Claim 36, wherein

said changeable item is the design of said robotic device.

39. The order receiving device according to Claim 36, wherein

said data processing means analyzes said order sender's taste and/or the living environment based on said order sender's answer to said question, conducts the data processing according to said analysis result.

40. The order receiving device according to Claim 36, wherein

said data processing means as said data processing, forms image data of computer graphic image of said virtual creature and/or hardware reflecting said order sender's answer to said question, transmits said image data to said order sender.

41. An order receiving method for receiving an order of robotic device that acts or moves based on the predetermined control program, comprising:

a first step for transmitting question data concerning changeable items of said robotic device to the order sender who accessed via the predetermined communication path; and
a second step for conducting the predetermined data processing to construct said robotic device by reflecting said order sender's answer to said question.

42. The order receiving method according to Claim 41, wherein

said changeable item is the specification concerning said action or said motion of said robotic device.

43. The order receiving method according to Claim 41, wherein

said changeable item is the design of said robotic device.

44. The order receiving method according to Claim 41, wherein

said second step analyzes said order sender's taste and/or living environment based on said order sender's answer to said question, conducts said data processing according to said analysis result.

45. The order receiving method according to Claim 41, wherein

said second step as said data processing forms image data of computer graphic image of said virtual creature and/or said hardware reflecting said order sender's answer to said question, transmits said image data to said order sender.

46. A computer program for causing the computer to execute the processing to receive an order of robotic device that acts or moves based on the predetermined control program, comprising:

a first step for transmitting question data concerning changeable items of said robotic device to the order sender who accessed via the predetermined communication path; and
a second step for conducting the predetermined data processing to construct said robotic device by refecting said order sender's answer to said question.

47. The computer program according to Claim 46, wherein

said changeable item is the specification concerning said action or motion of said robotic device.

48. The computer program according to Claim 46, wherein

said changeable item is the design of said robotic device.

**49.** The computer program according to Claim 46, wherein

at said second step analyzes said order sender's taste and/or living environment based on said order sender's answer to said question, conducts said data processing according to the analysis result.

**50.** The computer program according to Claim 46, wherein

said second step as said data processing, forms image data of computer graphic image of said virtual creature and/or said hardware reflecting said order sender's answer to said question, transmits said image data to said order sender.

**51.** A data sales 'agent system, comprising:

first communication means provided on the producer side of a part of data in the virtual creature held as a software in the hardware and acting or moving based on said software; second communication means provided on the sales consignee side to sell a part of data of said virtual creature; third communication means provided on the intending buyer side of said part of data of said virtual creature; and a communication path for connecting between said first, second and the third communication means; wherein said second communication means, comprising:

consignment accepting means for conducting the consignment accepting processing on said part of data of said virtual creature produced by said producer to be given from the first communication means via said communication path; and sales means for executing the predetermined sales processing to sell a part of data of said virtual creature consigned to the third communication means accessed via said communication path.

**52.** The data sales agent system according to Claim 51, wherein

said part of data is the data to control the action or motion of said virtual creature.

**53.** The data sales agent system according to Claim 52, wherein

said sales means transmits image data for simulation displaying the action or motion of said virtual creature based on said part of data specified to the third communication means that accessed via the communication path.

**54.** A data sales agent method, comprising:

a first step for conducting the predetermined consignment accepting processing a part of data of said virtual creature to be transmitted to the second communication means provided on the consignee side from the first communication means provided on the producer side of a part of data in the virtual creature held as the software in the hardware and acting or moving based on said software; and a second step of the second communication means conducting the predetermined sales processing to sell a part of data of said virtual creature consigned to the third communication means provided on the intending buyer side of a part of data of said virtual creature accessed via the predetermined communication path.

**55.** The data sales agent method according to Claim 54, wherein

said part of data is the data for controlling the action or motion of said virtual creature.

**56.** The data sales agent method according to Claim 54, wherein

at said second step transmits image data for simulation displaying the action or motion of said virtual creature based on said part of data specified to the third communication means that accessed.

**57.** A data sales device comprising:

consignment accepting means for accepting the consignment sales of a part of data in a virtual creature held as a software in the hardware and conducts actions and motions based on said software; and sales means for conducting sales of said part of data that said consignment accepting means accepted the consignment to the intending buyer of said part of data of the virtual creature.

**58.** The data sales device according to Claim 57, wherein

said part of data is the data to control actions and motions of said virtual creature.

**59.** The data sales device according to Claim 57, wherein:

said consignment accepting means accepts sales of said part of data via the network; and said sales means sells said part of data via said network.

**60.** The data sales device according to Claim 59, wherein:

said part of data is the data to control actions or motions of said virtual creature; and said sales means transmits image data for simulation displaying the action or motion of said virtual creature based on said part of data in advance to the intending buyer.

**61.** A data sales method comprising:

a first step to accept the consignment sales of a part of data in the virtual creature held as a software in the hardware and conducting action and motions based on said software; and a second step to conduct the sales of said part of data accepted the consignment to the intending buyer of said part of data of said virtual creature.

**62.** The data sales method according to Claim 61, wherein said part of data is the data to control actions or motions of said virtual creature.

**63.** The data sales method according to Claim 61, wherein:

the first step accepts the sales of said part of data via the network; and the second step sells said part of data via the network.

**64.** The data sales method according to Claim 63, wherein:

said part of data is the data to control actions or motions of said virtual creature; and the second step transmits image data for simulation displaying the action or motion of said virtual creature based on said part of data in advance to said intending buyer.

**65.** A computer program for making the computer execute the processing comprising:

a first step for accepting the consignment sales of a part of data in a virtual creature which is held as a software in the hardware and acts or moves based on said software; and a second step for conducting the sales of said part of data accepted the consignment to the intending buyer of said part of data of said virtual creature.

**66.** The computer program according to Claim 65, wherein

said part of data is the data to control actions or motions of said virtual creature.

**67.** The computer program according to Claim 65, wherein:

said first step accepts sales of the consignment sales of said part of data via the network; and said second step sells said part of data via said network.

**68.** The computer program according to Claim 66, wherein:

said part of data is the data to control actions or motions of said virtual creature; and said second step transmits image data for simulation displaying the action or motion of said virtual creature based on said part of data in advance to said intending buyer.

**69.** A data agent system, comprising:

first communication means provided on the producer side of the control data of a robotic device that acts or moves based on the predetermined control data; second communication means provided on the consignee side who conducts the consignment sales of said control data of said robotic device; third communication means provided on the intending buyer side of said control data of said robotic device; and a communication path to connect between said first, second and the third communication means; wherein said second communication means, comprising;

consignment accepting means for processing the consignment acceptance of said control data of said robotiv device to be supplied from the first communication means via said communication path; and sales means for executing the predetermined sales processing to sell said control data of said robotic device accepted the consignment to the third communication means that accessed via said communication path.

**70.** The data sales agent system according to Claim 69, wherein said sales means transmits image data for simulation displaying the action or motion of said robotic device based on the control data in advance to the buyer of said control data.

**71.** A data sales agent method, comprising:

a first step for consignment accepting processing the control data of said robotic device to be transmitted to the second communication means provided on the consignee side from the first communication means provided on the control data producer side of the robotic device that conducts actions or motions based on the predetermined control data in the second communication means; and

a second step of the second communication means executing the predetermined sales processing to sell said control data accepted the consignment to the third communication means of said control data intending buyer side who accessed.

**72.** The data sales agent method according to Claim 71, wherein

at said second step transmits image data for simulation displaying actions or motions of said robotic device based on the control data in advance to the intending buyer.

**73.** A data sales device comprising:

consignment accepting means for accepting the consignment sales of said control data of the robotic device that acts or moves based on the predetermined control data; and

sales means for selling said control data that said consignment accepting means accepted the consignment.

**74.** A data sales device, wherein:

said consignment accepting means accepts the consignment sales of said control data via the network; and

said sales means sells said control data via said network.

**75.** The data sales device according to Claim 74, wherein

said sales means transmits image data for simulation displaying the action or motion of said robotic device based on said control data in advance to the intending buyer.

**76.** A data sales method comprising

a first step for accepting the consignment sales of the control data of the robotic device that acts or moves based on the predetermined control data; and

a second step for selling the control data accepted the consignment to the intending buyer of said control data.

**77.** The data sales method according to Claim 76, wherein:

the first step accepts the consignment sales of said control data via the network; and
said second step sells said control data via said network.

**78.** The data sales method according to Claim 77, wherein

said second step transmits image data for simulation displaying the action or motion of said robotic device based on the control data in advance to the intending buyer.

**79.** A computer program for making the computer execute the processing comprising:

a first step for conducting the predetermined consignment accepting processing to accept the consignment sales of said control data of the robotic device that acts or moves based on the predetermined control data; and

a second step for conducting the predetermined sales processing to sell said control data consignment accepted to the intending buyer of said control data.

**80.** The computer program according to Claim 79, wherein:

said first step accepts the consignment sales of said control data via the network; and
said second step sells said control data via said network.

**81.** The computer program according to Claim 80, wherein

said second step transmits image data for simulation displaying the action or motion of said robotic device based on said control data in advance to the intending buyer.

FIG. 1

1 PET ROBOT

FIG. 2

EP 1 204 052 A1

$S1 \sim S5$

```
MEANING CONVERSION OBJECT    ~20
```

```
EMOTION/INSTINCT            ~21
GENERATION OBJECT
```

```
PERSONAL      ~24
INFORMATION
```

```
ACTION DETERMINING OBJECT    ~22
```

```
ACTION      ~25
MODEL
```

```
ACTION FORMING OBJECT    ~23
```

FIG. 3

NODE$_1$

$ARC_{n+1}$

$P_{n+1}$

$P_1$

$ARC_1$

NODE$_0$

$P_n$

$P_2$

NODE$_n$

$ARC_n$  • • • • • • •  $ARC_2$

NODE$_2$

FIG. 4

EP 1 204 052 A1

| node 100 NODE OF TRANSITTING END OUTPUT ACTION | INPUT EVENT NAME | DATA NAME | DATA RANGE | TRANSITION PROBABILITY TO OTHER NODES Di | | | | node 600 |
|---|---|---|---|---|---|---|---|---|
| | | | | node 120 ACTION 1 | node120 ACTION 2 | node 1000 MOVE BACK | | ACTION 4 |
| 1 | BALL | SIZE | 0.1000 | 30% | | | | |
| 2 | PAT | | | | 40% | | | |
| 3 | HIT | | | | 20% | | | |
| 4 | MOTION | | | | | | | |
| 5 | OBSTACLE | DISTANCE | 0.100 | | | 50% | | |
| 6 | | JOY | 50.100 | | | 100% | | |
| 7 | | SUPRISE | 50.100 | | | | | |
| 8 | | SUDNESS | 50.100 | | | | | |

NODE100

NODE120

26

FIG. 5

FIG. 6

FIG. 7

RT1 — ( START ) — SP0

↓

USER CONNECTS TO SERVER VIA PERSONAL TERMINAL — SP1

↓

SELECT EACH CHANGEABLE DESIGN ITEM — SP2

↓

MODIFY DESIGN AT SERVER ACCORDING TO SELECTION RESULT — SP3

↓

SIMULATION DISPLAY MODIFICATION RESULT — SP4

↓

USER JUDGES MODIFICATION RESULT — SP5

NO

↓ YES

DISPLAY QUESTION SCREEN — SP6

↓

INPUT ANSWER TO EACH QUESTION ITEM — SP7

↓

ANALYZE ANSWER ENTERED BY SERVER — SP8

↓

MODIFY SOFTWARE ACCORDING TO ANALYSIS RESULT — SP9

↓

SIMULATION DISPLAY MODIFICATION RESULT — SP10

↓

USER JUDGES MODIFICATION RESULT — SP11

NO

↓ YES

PACK/DISPATCH — SP12

↓

DRAW FEE FROM ACCOUNT — SP13

↓

( STOP ) — SP14

FIG. 8

FIG. 9

CHANGEABLE DESIGN ITEMS
· FUNCTION PARTS
    · PARTS DIVIDED PER MODULE, SUCH AS NECK, LEG, AND TAIL.
· DEVICE PARTS
    · PARTS DIVIDED PER DEVICE, SUCH AS CAMERA, SENSOR, ACTUATOR, CPU BOARD, LED.
· DRESS-UP PARTS
    · ACCESSORIES HAVING NO SPECIFIC FUNCTION, SUCH AS EAR FOR EXCHANGE, NAIL, TIPTOE AND TIP OF TAIL.
      REMOVABLE PARTS LIKE HARDWARE VIA CONNECTOR.
    · ACCESSORIES HAVING NO SPECIFIC FUNCTION, SUCH AS HAT, COSTUME, SUN-GLASSES, GLOVES, ACCESSORY
      (PIERCED EARRING, RING) NOT THROUGHING THE CONNECTOR.
· COLOR VARIATION (RED/BLUE)
· PATTERN (SKELTON/CAMOUFLAGE PATTERN)

FIG. 10

FIG. 11

(QUESTION FOR SOFTWARE)

Q1: MOTION OF PET ROBOT
1. PISS 2. STRETCH 3. CHEERS

Q2: SOUND OF PET ROBOT
1. BOW-WOW 2. YAWNING 3. LASER

Q3: ACTION TYPE OF PET ROBOT
1. DOG-TYPE 2. CAT-TYPE 3. ROBOT-TYPE

Q4: CHARACTER OF PET ROBOT
1. NAUGHTY 2. LAZY 3. GENTLE

•
•
•
•
•

(A)                                              70

(QUESTION FOR USER)

Q1: AGE OF USER
1. 0 - 10 2. 10 - 20 3. 30 - 40

Q2: OCCUPATION OF USER
1. STUDENT 2. OFFICE WORKER
3. SELF-MANAGEMENT BUSINESS OWNER

Q3: DIMENSIONS OF USER'S ROOM
1. LESS THAN 4-JO 2. 6-JO 3. MORE THAN 10-JO

Q4: FAMILY OF USER
1. SINGLE 2. JUST-MARRIED 3. ONE CHILD

Q5: LANGUAGE USER USES
1. ENGLISH 2. JAPANESE 3. FRENCH

Q6: USER'S FAVORITE TIME ZONE
1. MORNING TYPE (AM6:00 - PM9:00)
2. DAY TYPE      (AM8:30 - PM12:00)
3. NIGHT TYPE    (AM11:00 - PM3:00)

(B)                                              70

FIG. 12

EP 1 204 052 A1

CHANGEABLE INTERNAL CONDITION ITEMS
· EMOTION TENDENCY (EASY TO GET ANGRY/CHEERFUL/PESSIMISTIC)
· INSTINCT TENDENCY (DIFFICULT TO BE TAMED/FULL OF CURIOSITY/
  LAZY/EASY TO GET STARVED)
· CHARACTER (CHEERFUL/GLOOMY/NAUGHTY/CONSERVATIVE)
· HOROSCOPE (BULL/VIRGIN/BALANCE)
· ZODIAC SIGNS (DOG/DRAGON/SHEEP)

CHANGEABLE ACTION CONFIGURATION ITEMS
· ACTION DATA
· MOTION DATA
· SOUND DATA
· LIGHT EMITTING DATA

FIG. 13

EP 1 204 052 A1

(QUESTION FOR SOFTWARE)

Q1: MOTION OF PET ROBOT
1.PISS 2.STRETCH 3.CHEERS

Q2: SOUND OF PET ROBOT
1.BOW-WOW 2.YAWNING 3.LASER

Q3: ACTION TYPE OF PET ROBOT
1.DOG-TYPE 2.CAT-TYPE 3.ROBOT-TYPE

Q4: CHARACTER OF PET ROBOT
1.NAUGHTY 2.LAZY 3.GENTLE
· · · · ·

SELECTION OF BUYER

Q1: MOTION OF PET ROBOT
1.PISS 2.STRETCH

Q2: SOUND OF PET ROBOT
1.BOW-WOW 3.LASER

Q3: ACTION TYPE OF PET ROBOT
1.DOG-TYPE

Q4: CHARACTER OF PET ROBOT
3.GENTLE
· · · · ·

MODIFY DATA FROM "BUYER'S SELECTION"

1. ADD MOTION FILE
   EXAMPLE:ADD-Oshikko.mtn,Nobi.mtn

2. ADD SOUND FILE
   EXAMPLE:ADD-Wanwan.mid,Laser.mid

3. SELECT/EDIT ACTION FILE
   EXAMPLE:ADD-DogStpe.act

4. EDIT ACTION FILE/INTERNAL
   CONDITION COEFFICIENT
   EXAMPLE:EDIT FRANKLY.
   ACTION FILE:
   RETURN HAND 100% TO THE INPUT
   "GIVE ME HAND"
   EDIT INTERNAL CONDITION COEFFICIENT
   "JOY" INCREASES TO THE INPUT
   "OTE (GIVE ME HAND)"
· · · · ·

FIG. 14

38

Sample Motion

82A — Walk

82B — Banzai

82C — Laugh

Sample Sound

83A — Akubi

83B — Wanwan

Selection Data Name

Type : Dog

IQ : Clever

Phase : Adult

Autonomous Play

84A — Play    Stop — 84B

85A    85D
85B    85C

Zoom In — 86A

Zoom Out — 86B

OK    CANCEL

88    87

80

EP 1 204 052 A1

FIG. 15

FIG. 16

FIG. 17

S10~S14

```
┌─────────────────────────────────────────────┐          ┌ ─ ─ ─ ─ ─ ─ ─ ─ ─ ┐
│  ┌───────────────────────────────────┐       │            104B
│  │  MEANING CONVERSION OBJECT  ～110  │       │          │ ─ ─ ─ ─ ─ ─ ─ ─ ─ │
│  └───────────────────────────────────┘       │            ┌───────────────┐
│      ┌───────────────────────────────┐  ～111 │          │ │  PERSONAL     │ ～114
│      │   EMOTION/INSTINCT            │←───────────────────→│  INFORMATION  │ │
│      │   GENERATION OBJECT           │ │      │            └───────────────┘
│      └───────────────────────────────┘ │      │          │                   │
│      ┌───────────────────────────────┐ ～112  │            ┌───────────────┐
│      │  ACTION DETERMINING OBJECT    │←───────────────────→│  ACTION       │ ～115
│      └───────────────────────────────┘        │          │ │  MODEL        │ │
│  ┌───────────────────────────────────┐        │            └───────────────┘
│  │  ACTION GENERATION OBJECT   ～113  │        │          │ ─ ─ ─ ─ ─ ─ ─ ─ ─ ┘
│  └───────────────────────────────────┘        │
└─────────────────────────────────────────────┘
   ～104A
```

FIG. 18

FIG. 19

FIG. 20

EP 1 204 052 A1

FIG. 21

RT2 — START — SP20

↓

MOTION PRODUCER CONNECTS TO
SERVER VIA PERSONAL TERMINAL — SP21

↓

REGISTER DATA PRODUCED BY
MOTION PRODUCER TO SERVER
TEMPORARILY — SP22

↓

EXAMINE DATA STORED IN SERVER — SP23

↓

IN THE
CASE WHERE THE QUALITY
OF DATA IS WORTHY
FOR SALE — SP24

↓

ISSUE CERTIFICATE OF
REGISTRATION TO MOTION
PRODUCER — SP25

↓

FINAL REGISTRATION
OF CONTROL DATA — SP26

INFORM REGISTRATION REJECTION
TO MOTION PRODUCER — SP27

↓

STOP — SP28

FIG. 22

RT3 — START — SP30

↓

SP31
BUYER CONNECTS TO SERVER
VIA PERSONAL TERMINAL

↓

SP32
DISPLAY INDEX SCREEN

↓

SP33
SELECT DESIRED DATA ←→ SP34
REFER TO DATA SIMULATION

↓

SP35
APPLY THE PURCHASE OF
DESIRED DATA

↓

SP36
DOWNLOAD DATA TO BUYER'S
VIRTUAL PET

↓

SP37
DRAW FEE FROM BUYER'S
ACCOUNT

↓

SP38
PUT DATA FEE INTO THE
MOTION PRODUCER'S ACCOUNT
AFTER SUBTRACTING THE
ROYALITY AND COMMISSION
FROM DATA FEE

↓

STOP — SP39

FIG. 23

EP 1 204 052 A1

| MOTION | KEY WORD | START/END | REMARKS |
|---|---|---|---|
| **SELECT MOTION FILE** | | | ✕ |
| P1P1 | Performance | Sitting | Performance mode / Style1 / PERFORMA... |
| P1P2 | Performance | Sitting | Performance mode / Style1 / PERFORMA... |
| P1P3 | Performance | Sleeping | Performance mode / Style1 / PERFORMA... |
| P1P4 | Performance | Standing | Performance mode / Style1 / PERFORMA... |
| P1P5 | Performance | Standing | Performance mode / Style1 / INTERACTIO... |
| P1I1 | Interaction | Standing | Performance mode / Style1 / INTERACTIO... |
| P1I2 | Interaction | Standing | Performance mode / Style1 / INTERACTIO... |
| P1I3 | Interaction | Standing | Performance mode / Style1 / INTERACTIO... |
| P1I4 | Interaction | Sleeping | Performance mode / Style1 / INTERACTIO... |
| P1I5 | Interaction | Sleeping | Performance mode / Style1 / INTERACTIO... |
| P1I6 | Interaction | Sitting | Performance mode / Style1 / INTERACTIO... |
| P1I7 | Interaction | Sitting | Performance mode / Style1 / INTERACTIO... |
| P1I8 | Interaction | Sitting | Performance mode / Style1 / INTERACTIO... |
| P1I9 | Interaction | Sleeping | Performance mode / Style1 / PERFORMA... |
| P2P1 | Performance | Sitting | Performance mode / Style1 / PERFORMA... |

◁ ▷

O K     CANCEL

140

FIG. 24

MOTION NAME:

| Banzai.mtn |
|---|

142

MOTION TENDENCY:

| Dog | | Robot | | Child |
|---|---|---|---|---|

143A    143B    143C

MOTION TENDENCY:

| 65sec |
|---|

146

MOTION USAGE:

| Joy | | Anger | | Sadness | | Surprise | | Disgust | | Fear |
|---|---|---|---|---|---|---|---|---|---|---|

144A   144B   144C   144D   144E   144F

TYPE OF PET ROBOT

| EIBO ERS-110 | | EIBO ERS-111 |
|---|---|---|

145A    145B

DO YOU WANT TO REGISTER MOTION?

| YES | | NO |
|---|---|---|

147A   147B

PREVIEW SCREEN:

150

149

| Play | | Stop |
|---|---|---|

148A   148B

141

FIG. 25

WHAT IS THE TYPE OF PET ROBOT?

| EIBO ERS-110 | EIBO ERS-111 | EIBO ERS-112 | EIBO ERS-113 |

152A  152B  152C  152D

WHAT IS THE MOTION TENDENCY? :

| Dog | Robot | Child | Cat | Frog | Pig |

153A  153B  153C  153D  153E  153F

151

FIG. 26

TYPE OF VIRTUAL PET:     MOTION TENDENCY:

EIBO ERS-110          Dog

- - - - - - - - - - - - - - - - - - - - - - - - - - - - - - - - - - - - - - - -

MOTION USAGE:

Joy              Anger              Sadness

155
156A 156B 156C    157A 157B 157C    158A 158B 158C

| | Fig2 (Joy) | Fig3 (Joy) |
|---|---|---|

| Fig1 (Ang) | Fig2 (Ang) | Fig3 (Ang) |
|---|---|---|

| Fig1 (Sad) | Fig2 (Sad) | Fig3 (Sad) |
|---|---|---|

| Fig4 (Joy) | Fig5 (Joy) | Fig6 (Joy) |
|---|---|---|

| Fig4 (Ang) | Fig5 (Ang) | Fig6 (Ang) |
|---|---|---|

| Fig4 (Sad) | Fig5 (Sad) | Fig6 (Sad) |
|---|---|---|

156D 156E 156F    157D 157E 157F    158D 158E 158F

Surprise          Disgust            Fear

159A 159B 159C    160A 160B 160C    161A 161B 161C

| Fig1 (Sur) | Fig2 (Sur) | Fig3 (Sur) |
|---|---|---|

| Fig1 (Dis) | Fig2 (Dis) | Fig3 (Dis) |
|---|---|---|

| Fig1 (Fea) | Fig2 (Fea) | Fig3 (Fea) |
|---|---|---|

| Fig4 (Sur) | Fig5 (Sur) | Fig6 (Sur) |
|---|---|---|

| Fig4 (Dis) | Fig5 (Dis) | Fig6 (Dis) |
|---|---|---|

| Fig4 (Fea) | Fig5 (Fea) | Fig6 (Fea) |
|---|---|---|

159D 159E 159F    160D 160E 160F    161D 161E 161F

154

FIG. 27

TYPE OF PET ROBOT:    MOTION TENDENCY:    MOTION USAGE:

[EIBO ERS-110]—163    [Dog]—164    [Joy]—165

- - - - - - - - - - - - - - - - - - - - - - - - - - - - - - - - - - -

MOTION NAME:                           PREVIEW SCREEN:

[Banzai.mtn]—166                                                 171

MOTION TIME:

[65. sec]—167

MOTION PRODUCER:

[H. Noma]—168

MOTION PRICE:                                                     170

[¥350]—169

DO YOU WANT TO PURCHASE MOTION?          [Play]  [Stop]
                                          172C    172B

          [YES]        [NO]
          173A         173B

162

FIG. 28

EXPLANATION OF REFERENCE NUMERALS

1, 90... ... pet robot, 10, 100... ... controller, 10A... ... memory, 30... ... pet robot sales system, 31A to 31D, 121A to 121D... ... personal terminal, 37, 127... ... sales agency, 38, 128... ... server, 42, 132... ... CPU, 50... ... design selection screen, 60, 80... ... simulation screen, 70... ... question screen, 104A... ... external memory, 115... ... action model, 120... ... data sales system, 141... ... data registration screen, 150, 171... ... three-dimensional image picture, 151... ... classification specification screen, 154... ... index screen, 162... ... motion confirming screen, RT1... ... pet robot purchasing procedure, RT2... ... data registration procedure, RT3... ... control data purchasing procedure.

## INTERNATIONAL SEARCH REPORT

| International application No. |
| --- |
| PCT/JP00/09416 |

**A. CLASSIFICATION OF SUBJECT MATTER**
Int.Cl$^7$  G06F17/60

According to International Patent Classification (IPC) or to both national classification and IPC

**B.   FIELDS SEARCHED**

Minimum documentation searched (classification system followed by classification symbols)
Int.Cl$^7$  G06F17/60

Documentation searched other than minimum documentation to the extent that such documents are included in the fields searched

| Jitsuyo Shinan Koho | 1922-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| Y | JP, 1-103740, A (NEC Corporation), 20 April, 1989 (20.04.89)   (Family: none) | 1-81 |
| Y | JP, 10-235019, A (Sony Corporation), 08 September, 1998 (08.09.98)   (Family: none) | 1-81 |
| Y | JP, 10-320454, A (Hitachi, Ltd.), 04 December, 1998 (04.12.98)   (Family: none) | 3,5,8,10,13, 15,18,20,23, 25,28,30,33, 35,38,40,43, 45,48,50,53, 56,60,64,68, 70,72,75,78,81 |
| Y | JP, 11-91189, A (Dainippon Printing Co., Ltd.), 06 April, 1999 (06.04.99)   (Family: none) | 3,5,8,10,13, 15,18,20,23, 25,28,30,33, 35,38,40,43, 45,48,50,53, 56,60,64,68, 70,72,75,78,81 |

☒  Further documents are listed in the continuation of Box C.          ☐  See patent family annex.

| | |
| --- | --- |
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier document but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 28 February, 2001 (28.02.01) | 13 March, 2001 (13.03.01) |

| Name and mailing address of the ISA/ Japanese Patent Office | Authorized officer |
| --- | --- |
| Facsimile No. | Telephone No. |

Form PCT/ISA/210 (second sheet) (July 1992)

## INTERNATIONAL SEARCH REPORT

International application No.

PCT/JP00/09416

C (Continuation).   DOCUMENTS CONSIDERED TO BE RELEVANT

| Category* | Citation of document, with indication, where appropriate, of the relevant passages | Relevant to claim No. |
|---|---|---|
| A | JP, 6-68063, A (Fujitsu Limited),<br>11 March, 1994 (11.03.94)   (Family: none) | 1-81 |
| A | EP, 898237, A2 (Sony Corporation),<br>24 February, 1999 (24.02.99)<br>& JP, 11-126017, A | 1-81 |
| A | EP, 924034, A2 (Sony Corporation),<br>23 June, 1999 (23.06.99)<br>& JP, 11-188678, A | 1-81 |

Form PCT/ISA/210 (continuation of second sheet) (July 1992)